(19) Europäisches Patentamt

European Patent Office

Office européen des brevets

(11) **EP 1 355 296 B1**

(12) **EUROPEAN PATENT SPECIFICATION**

(45) Date of publication and mention
of the grant of the patent:
**31.05.2006 Bulletin 2006/22**

(51) Int Cl.:
**G10L 15/20** (2006.01)

(21) Application number: **03252357.3**

(22) Date of filing: **14.04.2003**

(54) **Keyword detection in a speech signal**

Schlüsselworterkennung in einem Sprachsignal

Détection de mot clé dans un signal de parole

(84) Designated Contracting States:
**DE FR GB**

(30) Priority: **17.04.2002 JP 2002114632**

(43) Date of publication of application:
**22.10.2003 Bulletin 2003/43**

(73) Proprietor: **Pioneer Corporation
Tokyo-to (JP)**

(72) Inventors:
• **Kawazoe, Yoshihiro,
c/o Pioneer Corporation
Tsurugashima-shi,
Saitama-ken (JP)**
• **Kobayashi, Hajime,
c/o Pioneer Corporation
Tsurugashima-shi,
Saitama-ken (JP)**

(74) Representative: **Haley, Stephen
Gill Jennings & Every LLP
Broadgate House
7 Eldon Street
London EC2M 7LH (GB)**

(56) References cited:
• VILLARRUBIA L ET AL: "Rejection techniques for digit recognition in telecommunication applications" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. VOL. 4, 27 April 1993 (1993-04-27), pages 455-458, XP010110491 ISBN: 0-7803-0946-4
• ROSE R C ET AL ROSE R C ET AL: "A HIDDEN MARKOV MODEL BASED KEYWORD RECOGNITION SYSTEM1 A HIDDEN MARKOV MODEL BASED KEYWORD RECOGNITION SYSTEM1" SPEECH PROCESSING 1. ALBUQUERQUE, APRIL 3 - 6, 1990, INTERNATIONAL CONFERENCE ON ACOUSTICS, SPEECH & SIGNAL PROCESSING. ICASSP, NEW YORK, IEEE, US SPEECH PROCESSING 1. ALBUQUERQUE, APRIL 3 - 6, 1990, INTERNATIONAL CONFERENCE ON ACOUSTICS, SPEECH & SI, vol. VOL. 1 CONF. 15 VOL. 1 CONF. 15, April 1990 (1990-04), pages 129 129-132 132, XP000146422

EP 1 355 296 B1

**Description**

The present invention relates to a technical field regarding speech recognition by an HMM (Hidden Markov Models) method and, particularly, to a technical field regarding recognition of keywords from spontaneous speech.

In recent years, speech recognition apparatus have been developed which recognize spontaneous speech uttered by man. When a man speaks predetermined words, these devices recognize the spoken words from their input signals.

For example, various devices equipped with such a speech recognition apparatus, such as an navigation system mounted in a vehicle for guiding the movement of the vehicle and personal computer, will allow the user to enter various information without the need for manual keyboard or switch selecting operations.

Thus, for example, the operator can enter desired information in the navigation system even in a working environment where the operator is driving the vehicle by using his/her both hands

Typical speech recognition methods include a method which employs probability models known as HMM (Hidden Markov Models).

In the speech recognition, the spontaneous speech is recognized by matching patterns of feature values of the spontaneous speech with patterns of feature values of speech which are prepared in advance and represent candidate words called keywords.

Specifically, in the speech recognition, feature values of inputted spontaneous speech (input signals) divided into segments of a predetermined duration are extracted by analyzing the inputted spontaneous speech, the degree of match (hereinafter referred to as likelihood) between the feature values of the input signals and feature values of keywords represented by HMMs prestored in a database is calculated, likelihood over the entire spontaneous speech is accumulated, and the keyword with the highest likelihood as a recognized keyword is decided.

Thus, in the speech recognition, the keywords is recognized based on the input signals which is spontaneous speech uttered by man.

Incidentally, an HMM is a statistical source model expressed as a set of transitioning states. It represents feature values of predetermined speech to be recognized such as a keyword. Furthermore, the HMM is generated based on a plurality of speech data sampled in advance.

It is important for such speech recognition how to extract keywords contained in spontaneous speech.

Beside keywords, spontaneous speech generally contains extraneous speech, i.e. previously known words that is unnecessary in recognition (words such as "er" or "please" before and after keywords), and in principle, spontaneous speech consists of keywords sandwiched by extraneous speech.

Conventionally, speech recognition often employs "word-spotting" techniques to recognize keywords to be speech-recognized.

In the word-spotting techniques, HMMs which represent not only keyword models but also and HMMs which represent extraneous speech models (hereinafter referred to as garbage models) are prepared, and spontaneous speech is recognized by recognizing a keyword models, garbage models, or combination thereof whose feature values have the highest likelihood.

Generally, keywords are recognized by identifying a plurality of extraneous speech using one HMM which is generated based on a plurality of speech segments. However, low likelihoods are accumulated relatively because a plurality of the extraneous speech is identified by using one HMM. Accordingly, device for recognizing spontaneous speech described above is prone to misrecognition. Other examples of prior art methods can be found disclosed in "Rejection techniques for digit recognition in telecommunication applications" by Villarrubia et al. in Statistical Signal and Array Processing, XP010110491, ISBN: 0-7803-0946-4 and "A hidden Markov model based keyword recognition system" by Rose R C et al. in Speech Processing 1, International Conference on Acoustics, Speech & Signal Processing, XP000146422.

The present invention has been made in view of the above problems. Its object is to provide a speech recognition apparatus which can achieve high speech recognition performance without increasing the data quantity of feature values of extraneous speech.

In order to achieve the above object, the present invention provides a speech recognition apparatus for recognizing at least one of keywords contained in uttered spontaneous speech, characterized in that the apparatus comprises:

an extraction device for extracting a spontaneous-speech feature value, which is feature value of speech segment of the spontaneous speech, by analyzing the spontaneous speech;

a database in which at least one of keyword feature data indicating feature value of speech segment of said keyword and at least one of an extraneous-speech feature data indicating feature value of speech segment of extraneous-speech is prestored,

a calculation device for calculating likelihood which indicates probability that at least part of the feature values of the extracted spontaneous speech is matched with said keyword feature data and said extraneous-speech feature data;
a determining device for determining at least one of said keywords to be recognized and said extraneous-speech based on the calculated likelihood,

wherein the calculation device calculates the likelihood by using a predetermined correction value when said calculation device calculates the likelihood which indicates probability that at least part of the feature values of the extracted spontaneous speech is matched with said extraneous-speech feature data; and
a setting device for setting the correction value based on noise level around where the spontaneous speech is uttered, wherein the calculation device calculates the likelihood by using the set correction value when said calculation device calculates the likelihood which indicates probability that at least part of the feature values of the extracted spontaneous speech is matched with said extraneous-speech feature data.

The present invention also provides a speech recognition apparatus for recognizing at least one of keywords contained in uttered spontaneous speech; characterized in that said apparatus comprises:

an extraction device for extracting a spontaneous-speech feature value, which is feature value of speech segment of the spontaneous speech, by analyzing the spontaneous speech;
a database in which at least one of keyword feature data indicating feature value of speech segment of said keyword and at least one of an extraneous-speech feature data indicating feature value of speech segment of extraneous-speech is prestored,
a calculation device for calculating likelihood which indicates probability that at least part of the feature values of the extracted spontaneous speech is matched with said keyword feature data and said extraneous-speech feature data;
a determining device for determining at least one of said keywords to be recognized and said extraneous-speech based on the calculated likelihood,

wherein the calculation device calculates the likelihood by using a predetermined correction value when said calculation device calculates the likelihood which indicates probability that at least part of the feature values of the extracted spontaneous speech is matched with said extraneous-speech feature data; and
a setting device for setting the correction value based on the ratio between duration of the determined keyword and duration of the spontaneous speech when the determining device determines at least one of said keywords to be recognized and said extraneous speech based on the calculated likelihood,
wherein said calculation device calculates the likelihood by using the set correction value when said calculation device calculates the likelihood which indicates probability that at least part of the feature values of the extracted spontaneous speech is matched with said extraneous-speech feature data.

Preferably, the extraneous-speech feature data prestored in said database has data of feature values of speech segment of a plurality of the extraneous-speech.

Preferably, in case where an extraneous-speech component feature data indicating feature value of speech segment of extraneous-speech component which is component of the extraneous speech is prestored in said database, wherein:

said calculation device for calculating likelihood based on said extraneous-speech component feature data when said calculation device calculates the likelihood which indicates probability that at least part of the feature values of the extracted spontaneous speech is matched with said extraneous-speech feature data, and
said determining device for determining at least one of said keywords to be recognized and said extraneous-speech based on the calculated likelihood.

The present invention further provides a speech recognition method of recognizing at least one of keywords contained in uttered spontaneous speech, characterized in that said method comprises:

an extraction process of extracting a spontaneous-speech feature value, which is feature value of speech segment of the spontaneous speech, by analyzing the spontaneous speech;
an acquiring process of acquiring at least one of keyword feature data indicating feature value of speech segment of said keyword and at least one of an extraneous-speech feature data indicating feature value of speech segment of extraneous-speech, said keyword feature data and extraneous-speech feature data prestoring in a database;
a calculation process of calculating likelihood which indicates probability that at least part of the feature values of the extracted spontaneous speech is matched with said keyword feature data and said extraneous-speech feature data;

a determination process of determining at least one of said keywords to be recognized and said extraneous-speech based on the calculated likelihood, wherein said calculation process calculates the likelihood by using a predetermined correction value when said calculation process calculates the likelihood which indicates probability that at least part of the feature values of the extracted spontaneous speech is matched with said extraneous-speech feature data; and

a setting process of setting the correction value based on noise level around where the spontaneous speech is uttered,

wherein said calculation process calculates the likelihood by using the set correction value when said calculation process calculates the likelihood which indicates probability that at least part of the feature values of the extracted spontaneous speech is matched with said extraneous-speech feature data.

The present invention further provides a speech recognition method of recognizing at least one of keywords contained in uttered spontaneous speech, characterized in that said method comprises:

an extraction process of extracting a spontaneous-speech feature value, which is feature value of speech segment of the spontaneous speech, by analyzing the spontaneous speech;

an acquiring process of acquiring at least one of keyword feature data indicating feature value of speech segment of said keyword and at least one of an extraneous-speech feature data indicating feature value of speech segment of extraneous-speech, said keyword feature data and extraneous-speech feature data prestoring in a database;

a calculation process of calculating likelihood which indicates probability that at least part of the feature values of the extracted spontaneous speech is matched with said keyword feature data and said extraneous-speech feature data;

a determination process of determining at least one of said keywords to be recognized and said extraneous-speech based on the calculated likelihood, wherein said calculation process calculates the likelihood by using a predetermined correction value when said calculation process calculates the likelihood which indicates probability that at least part of the feature values of the extracted spontaneous speech is matched with said extraneous-speech feature data; and

a setting process of setting the correction value based on the ratio between duration of the determined keyword and duration of the spontaneous speech when the determination process determines at least one of said keywords to be recognized and said extraneous speech based on the calculated likelihood,

wherein said calculation process calculates the likelihood by using the set correction value when said calculation process calculates the likelihood which indicates probability that at least part of the feature values of the extracted spontaneous speech is matched with said extraneous-speech feature data.

Preferably, the extraneous-speech feature data prestored in said database has data of feature values of speech segment of a plurality of the extraneous-speech.

Preferably, in case where an extraneous-speech component feature data indicating feature value of speech segment of extraneous-speech component which is component of the extraneous speech is prestored in said database, wherein:

said calculation process of calculating likelihood based on said extraneous-speech component feature data when said calculation process calculates the likelihood which indicates probability that at least part of the feature values of the extracted spontaneous speech is matched with said extraneous-speech feature data, and

said determination process of determining at least one of said keywords to be recognized and said extraneous-speech based on the calculated likelihood.

The present invention further comprises a recording medium wherein a speech recognition program is recorded so as to be read and executed by a computer, the computer being adapted to control a speech recognition apparatus for recognizing at least one of keywords contained in uttered spontaneous speech, characterized in that said program causes the computer to execute :

a step of extracting a spontaneous-speech feature value, which is feature value of speech segment of the spontaneous speech, by analyzing the spontaneous speech;

a step of acquiring at least one of keyword feature data indicating feature value of speech segment of said keyword and at least one of an extraneous-speech feature data indicating feature value of speech segment, of extraneous-speech, said keyword feature data and extraneous-speech feature data prestoring in a database

a step of calculating likelihood which indicates probability that at least part of the feature values of the extracted spontaneous speech is matched with said keyword feature data and said extraneous-speech feature data;

a step of determining at least one of said keywords to be recognized and said extraneous-speech based on the calculated likelihood,

wherein said calculation step calculates the likelihood by using a predetermined correction value when said calculation step calculates the likelihood which indicates probability that at least part of the feature values of the extracted spontaneous speech is matched with said extraneous-speech feature data; and
a step of setting the correction value based on noise level around where the spontaneous speech is uttered, and
wherein said calculation step calculates the likelihood by using the set correction value when said calculation step calculates the likelihood which indicates probability that at least part of the feature values of the extracted spontaneous speech is matched with said extraneous-speech feature data.

The present invention further comprises a recording medium wherein a speech recognition program is recorded so as to be read and executed by a computer, the computer being adapted to control a speech recognition apparatus for recognizing at least one of keywords contained in uttered spontaneous speech, characterized in that said program causes the computer to execute:

a step of extracting a spontaneous-speech feature value, which is feature value of speech segment of the spontaneous speech, by analyzing the spontaneous speech;
a step of acquiring at least one of keyword feature data indicating feature value of speech segment of said keyword and at least one of an extraneous-speech feature data indicating feature value of speech segment of extraneous-speech, said keyword feature data and extraneous-speech feature data prestoring in a database
a step of calculating likelihood which indicates probability that at least part of the feature values of the extracted spontaneous speech is matched with said keyword feature data and said extraneous-speech feature data;
a step of determining at least one of said keywords to be recognized and said extraneous-speech based on the calculated likelihood,

wherein said calculation step calculates the likelihood by using a predetermined correction value when said calculation step calculates the likelihood which indicates probability that at least part of the feature values of the extracted spontaneous speech is matched with said extraneous-speech feature data; and
a step of setting the correction value based on the ratio between duration of the determined keyword and duration of the spontaneous speech when the determining step determines at least one of said keywords to be recognized and said extraneous speech based on the calculated likelihood,
wherein said calculation step calculates the likelihood by using the set correction value when said calculation step calculates the likelihood which indicates probability that at least part of the feature values of the extracted spontaneous speech is matched with said extraneous-speech feature data.

Preferably, the program further causes the computer to acquire said extraneous-speech feature data prestored in said database which has data of feature values of speech segment of a plurality of the extraneous-speech.

Preferably, in case where an extraneous-speech component feature data indicating feature value of speech segment of extraneous-speech component which is component of the extraneous speech is prestored in said database, wherein the program further causes the computer to execute :

a step of calculating likelihood based on said extraneous-speech component feature data when said calculation step calculates the likelihood which indicates probability that at least part of the feature values of the extracted spontaneous speech is matched with said extraneous-speech feature data, and
a step of determining at least one of said keywords to be recognized and said extraneous-speech based on the calculated likelihood.

In the drawings:

FIG. 1 is a diagram showing a speech recognition apparatus according to a first embodiment of the present invention, wherein an HMM-based speech language model is used;
FIG. 2 is a diagram showing an HMM-based speech language model for recognizing arbitrary spontaneous speech;
FIG. 3A is graphs showing cumulative likelihood of an extraneous-speech HMM for an arbitrary combination of extraneous speech and a keyword;
FIG. 3B is graphs showing cumulative likelihood of extraneous-speech component HMM for an arbitrary combination of extraneous speech and a keyword;
FIG. 4 is an exemplary diagram showing how transitions take place in speech language model states when a correction value is added to or subtracted from likelihood;
FIG. 5 is a diagram showing configuration of a speech recognition apparatus according to a first embodiment of the present invention;

FIG. 6 is a flowchart showing operation of a keyword recognition process according to the first embodiment;

FIG. 7 is a diagram showing configuration of a speech recognition apparatus according to a second embodiment of the present invention; and

FIG. 8 is a flowchart showing operation of a keyword recognition process according to the second embodiment.

The present invention will now be described with reference to preferred embodiment shown in the drawings.

The embodiments described below are embodiments in which the present invention is applied to speech recognition apparatus.

Extraneous-speech components described in this embodiment represent basic phonetic units, such as phonemes or syllables, which compose speech, but syllables will be used in this embodiment for convenience of the following explanation.

[First embodiment]

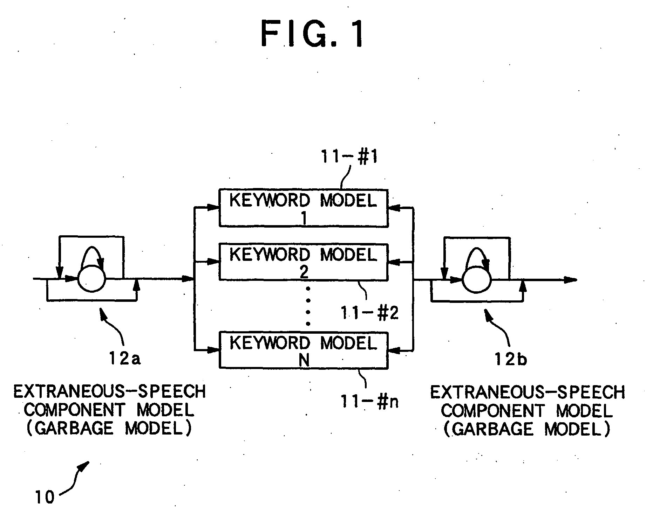

FIGS. 1 to 6 are diagrams showing a first embodiment of a speech recognition apparatus according to the present invention.

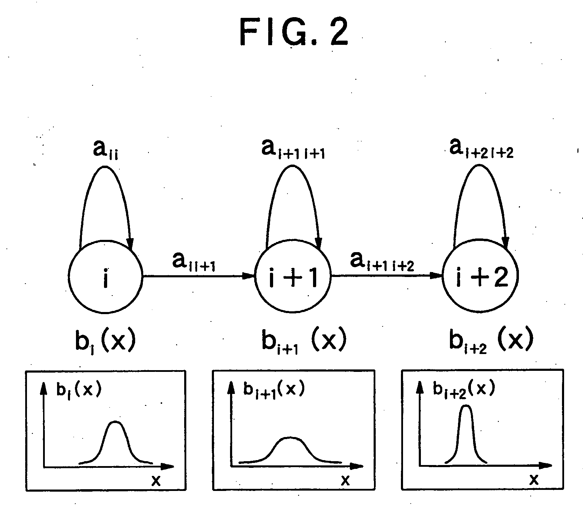

First, an HMM-based speech language model according to this embodiment will be described with reference to FIG. 1 and FIG. 2.

FIG. 1 is a diagram showing an HMM-based speech language model of a recognition network according to this embodiment, and FIG. 2 is a diagram showing a speech language model for recognizing arbitrary spontaneous speech using arbitrary HMMs.

This embodiment assumes a model (hereinafter referred to as a speech language model) which represents an HMM-based recognition network such as the one shown in FIG. 1, i.e., a speech language model 10 which contains keywords to be recognized.

The speech language model 10 consists of keyword models 11 connected at both ends with garbage models (hereinafter referred to as component models of extraneous-speech) 12a and 12b which represent components of extraneous speech. In case where keyword contained in spontaneous speech is recognized, a keyword contained in spontaneous speech is identified by matching the keyword with the keyword models 11, and extraneous speech contained in spontaneous speech is identified by matching the extraneous speech with the component models of extraneous-speech 12a and 12b.

Actually, the keyword models 11 and component models of extraneous-speech 12a and 12b represent a set of states which transition each arbitrary segments of spontaneous speech. The statistical source models "HMMs" which is an unsteady source represented by combination of steady sources composes the spontaneous speech.

The HMMs of the keyword models 11 (hereinafter referred to as keyword HMMs) and the HMMs of the extraneous-speech component models 12a and 12b (hereinafter referred to as extraneous-speech component HMMs) have two types of parameter. One parameter is a state transition probability which represents the probability of the state transition from one state to another, and another parameter is an output probability which outputs the probability that a vector (feature vector for each frame) will be observed when a state transitions from one state to another. Thus, the HMMs of the keyword models 11 represents a feature pattern of each keyword, and extraneous-speech component HMMs 12a and 12b represents feature pattern of each extraneous-speech component.

Generally, since even the same word or syllable shows acoustic variations for various reasons, speech sounds composing spontaneous speech vary greatly with the speaker. However, even if uttered by different speakers, the same speech sound can be characterized mainly by a characteristic spectral envelope and its time variation. Stochastic characteristic of a time-series pattern of such acoustic variation can be expressed precisely by an HMM.

Thus, as described below, in this embodiment, keywords contained in the spontaneous speech are recognized by matching feature values of the inputted spontaneous speech with keyword HMMs and extraneous-speech HMMs and calculating likelihood.

Incidentally, the likelihood indicates probability that feature values of the inputted spontaneous speech is matched with keyword HMMs and extraneous-speech.

According to this embodiment, a HMM is a feature pattern of a speech segment of each keyword or feature value of a speech segment of each extraneous-speech component. Furthermore, the HMM is a probability model which has spectral envelope data that represents power at each frequency at each regular time intervals or cepstrum data obtained from an inverse Fourier transform of a logarithm of the power spectrum.

Furthermore, the HMMs are created and stored beforehand in each databases by acquiring spontaneous speech data of each phonemes uttered by multiple people, extracting feature patterns of each phonemes, and learning feature pattern data of each phonemes based on the extracted feature patterns of the phonemes.

When keywords contained in spontaneous speech are recognized by using such HMMs, the spontaneous speech to be recognized is divided into segments of a predetermined duration and each segment is matched with each prestored data of the HMMs, and then the probability of the state transition of these segments from one state to another are calculated based on the results of the matching process to identify the keywords to be recognized.

Specifically, in this embodiment, the feature value of each speech segment are compared with the each feature pattern of prestored data of the HMMs, the likelihood for the feature value of each speech segment to match the HMM feature patterns is calculated, cumulative likelihood which represents the probability for a connection among all HMMs, i.e., a connection between a keyword and extraneous speech is calculated by using matching process (described later), and the spontaneous speech is recognized by detecting the HMM connection with the highest likelihood.

The HMM, which represents an output probability of a feature vector, generally has two parameters: a state transition probability a and an output probability b, as shown in FIG. 2. The output probability of an inputted feature vector is given by a combined probability of a multidimensional normal distribution and the likelihood of each state is given by Eq. (1).

$$ b_i(x) = \frac{1}{\sqrt{(2\pi)^P \left| \sum_i \right|}} \exp\left( -\frac{1}{2} (x - \mu_i)' \sum_i^{-1} (x - \mu_i) \right) \qquad \text{Eq.(1)} $$

Incidentally x is the feature vector of an arbitrary speech segment, $\Sigma_i$ is a covariance matrix, $\lambda$ is a mixing ratio, $\mu_i$ is an average vector of feature vectors learned in advance, and P is the number of dimensions of the feature vector of the arbitrary speech segment.

FIG. 2 is a diagram showing a state transition probability a which indicates a probability when an arbitrary state i changes to another state (i + n),and output probability b with respect to the state transition probability a. Each graph in FIG. 2 shows an output probability that an inputted feature vector in a given state will be output.

Actually, logarithmic likelihood, which is the logarithm of Eq. (1) above, is often used for speech recognition, as shown in Eq. (2).

$$ \log b_i(x) = -\frac{1}{2} \log \left[ (2\pi) \right]^P \left| \sum_i \right| - \frac{1}{2} (x - \mu_i)' \sum_i^{-1} (x - \mu_i) \qquad \text{Eq. (2)} $$

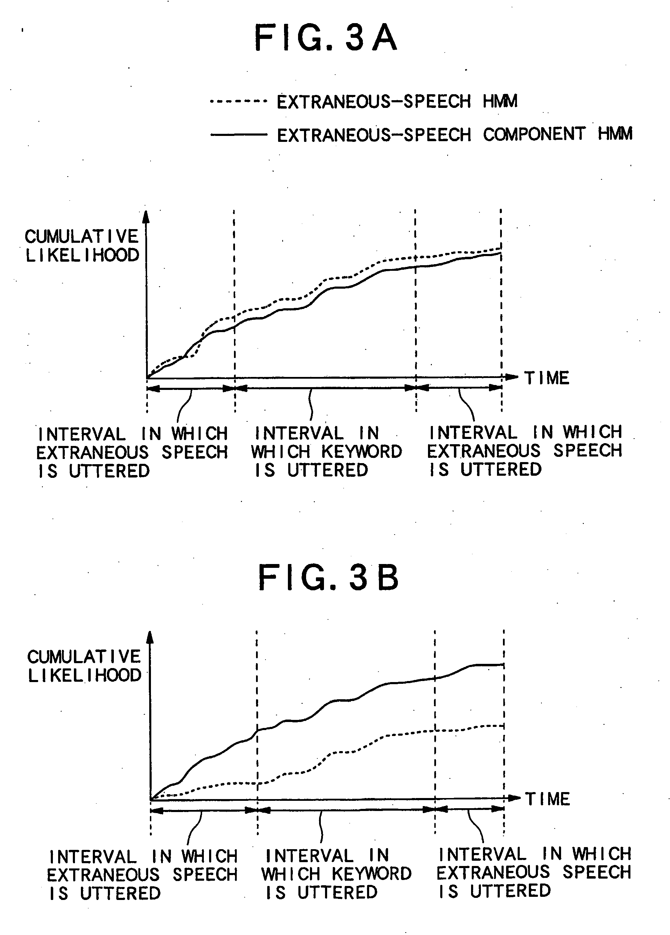

Next, an extraneous-speech component HMM which is a garbage model will be described with reference to FIG. 3.

FIG. 3 is a graph showing cumulative likelihood of an extraneous-speech HMM and extraneous-speech component HMM in an arbitrary combination of extraneous speech and a keyword.

As described above, in the case of conventional speech recognition apparatus, since extraneous-speech models are composed of HMMs which represent feature values of extraneous speech as with keyword models, to identify extraneous speech contained in spontaneous speech, the extraneous speech to be identified must be stored beforehand in a database.

The extraneous speech to be identified can include all speech except keywords ranging from words which do not constitute keywords to unrecognizable speech with no linguistic content. Consequently, to recognize extraneous speech contained in spontaneous speech properly, HMMs must be prepared in advance for a huge volume of extraneous speech.

Thus, in the conventional speech recognition apparatus, data on feature values of every extraneous speech must be acquired to recognize extraneous speech contained in spontaneous speech properly, for example, by storing it in databases. Accordingly, a huge amount of data must be stored in advance, but it is physically impossible to secure areas for storing the data.

Furthermore, in the conventional speech recognition apparatus, it takes a large amount of labor to generate the huge amount of data to be stored in databases or the like.

On the other hand, extraneous speech is also a type of speech, and thus it consists of components such as syllables and phonemes, which are generally limited in quantity.

Thus, if extraneous speech contained in spontaneous speech is identified based on the extraneous-speech components, it is possible to reduce the amount of data to be prepared as well as to identify every extraneous speech properly.

Specifically, since any extraneous speech can be composed by combining components such as syllables and phonemes, if extraneous speech is identified using data on such components prepared in advance, it is possible to reduce the amount of data to be prepared and identify every extraneous speech properly.

Generally, a speech recognition apparatus which recognizes keywords contained in spontaneous speech divides the spontaneous speech into speech segments at predetermined time intervals (as described later), calculates likelihood that the feature value of each speech segment matches a garbage model (such as an extraneous-speech HMM) or each keyword model (such as a keyword HMM) prepared in advance, accumulates the likelihood of each combination of a keyword and extraneous speech based on the calculated likelihoods of each speech segments of each extraneous speech HMM and each keyword model HMM, and thereby calculates cumulative likelihood which represents HMM connections.

When extraneous-speech HMMs to recognize the extraneous speech included in the spontaneous speech are not prepared in advance as is the case with conventional speech recognition apparatus, feature values of speech in the portion corresponding to extraneous speech in spontaneous speech show low likelihood of a match with both extraneous-speech HMMs and keywords HMMs as well as low cumulative likelihood of them, which will cause misrecognition.

However, when speech segments are matched with an extraneous-speech component HMM, feature values of extraneous speech in spontaneous speech shows high likelihood of match with prepared data which represents feature values of extraneous-speech component HMMs. Consequently, if feature values of a keyword contained in the spontaneous speech match keyword HMM data, cumulative likelihood of the combination of the keyword and the extraneous speech contained in the spontaneous speech is high, making it possible to recognize the keyword properly.

For example, when extraneous-speech HMMs which indicates garbage models of the extraneous speech contained in spontaneous speech are provided in advance as shown in FIG. 3(a), there is no difference in cumulative likelihood from the case where an extraneous-speech component HMM is used, but when extraneous-speech HMMs which indicates garbage models of the extraneous speech contained in spontaneous speech are not provided in advance as shown in FIG. 3(b), cumulative likelihood is low compared with the case where an extraneous-speech component HMM is used.

Thus, since this embodiment calculates cumulative likelihood using the extraneous-speech component HMM and thereby identifies extraneous speech contained in spontaneous speech, it can identify the extraneous speech properly and recognize keywords, using a small amount of data.

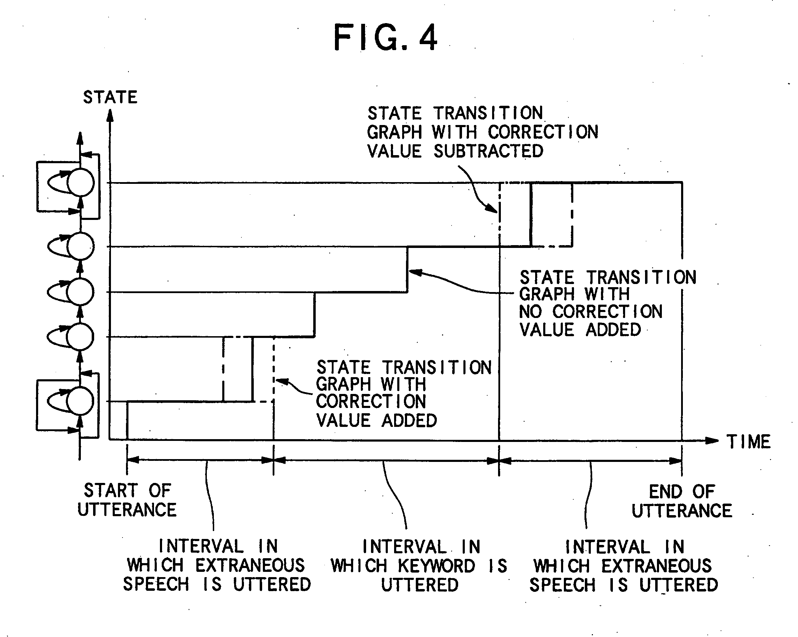

Next, with reference to FIG. 4, description will be given of how to adjust likelihoods by adding a correction value to the extraneous-speech component HMM according to this embodiment.

FIG. 4 is an exemplary diagram showing how transitions take place in speech language model states when a correction value is added to or subtracted from likelihood.

According to this embodiment, when calculating the likelihood of a match between each feature data of the extraneous-speech component HMM prepared in advance and the feature value of each frame, a correction value is added to the likelihood.

Specifically, according to this embodiment, as shown in Eq. (3), the correction value $\alpha$ is added only to the likelihood of a match--given by Eq. (2) above--between the feature data of the extraneous-speech component HMM and the feature value of each frame to adjust. In this way, the probabilities which represent each likelihoods are adjusted forcefully.

$$\log[b_i(x)] = -\frac{1}{2}\log\left[(2\pi)\right]^P\left|\sum_i\right| - \frac{1}{2}(x-\mu_i)'\sum_i^{-1}(x-\mu_i) + \alpha \quad \text{Eq. (3)}$$

According to this embodiment, as described later, extraneous speech is identified by using an HMM which represents feature values of extraneous-speech components. Basically, a single extraneous-speech component HMM has features of all components of extraneous speech such as phonemes and syllables, and thus every extraneous speech is identified by using this extraneous-speech component HMM.

However, the extraneous-speech component HMM which covers all the components has a lower likelihood of a match to the extraneous-speech components composing the extraneous speech to be identified than do extraneous-speech component HMMs each of which has the feature value of only one component. Consequently, if this method is used in calculating cumulative likelihood over the entire spontaneous speech, a combination of extraneous speech and a keyword irrelevant to spontaneous speech may be recognized.

In other words, a combination of extraneous speech and a keyword to be recognized may have a lower cumulative likelihood than the one calculated for another combination of other extraneous speech and a keyword, resulting in misrecognition.

Therefore, as shown in Eq. (3) above, according to this embodiment, misrecognition is prevented by adding the correction value $\alpha$ only when the likelihood of the extraneous-speech component HMM is calculated and adjusting the calculated likelihood in such a way as to increase the likelihood of the appropriate combination of the extraneous-speech component HMM and keyword HMM over other combinations.

Specifically, as shown in FIG. 4, when the correction value α which is added to calculate the likelihood of the extraneous-speech component HMM is positive, the likelihood of a match between the feature vector of each frame of the spontaneous speech and the extraneous-speech component HMM becomes high. Consequently, the computational accuracy of likelihoods except the likelihood of keyword HMMs increases during speech recognition of the spontaneous speech, making speech recognition segments except those for keywords longer than when the correction value α is not added.

Conversely, when the correction value α is negative, the likelihood of a match between the feature vector of each frame of the spontaneous speech and the extraneous-speech component HMM becomes low. Consequently, the computational accuracy of likelihood except the likelihoods of keyword HMMs decreases during speech recognition of the spontaneous speech, making speech recognition segments except those for keywords shorter than when the correction value α is not added.

Therefore, in addition to generating the extraneous-speech component HMM of each frame, storing it in the garbage model database, and calculating their likelihood, according this embodiment, misrecognition is prevented by adding the correction value α only when the likelihood of the extraneous-speech component HMM is calculated and adjusting the calculated likelihood in such a way as to increase the likelihood of the appropriate combination of the extraneous-speech component HMM and keyword HMM.

In this embodiment, as described later, the correction value α is set according to the noise level around where the spontaneous speech is uttered.

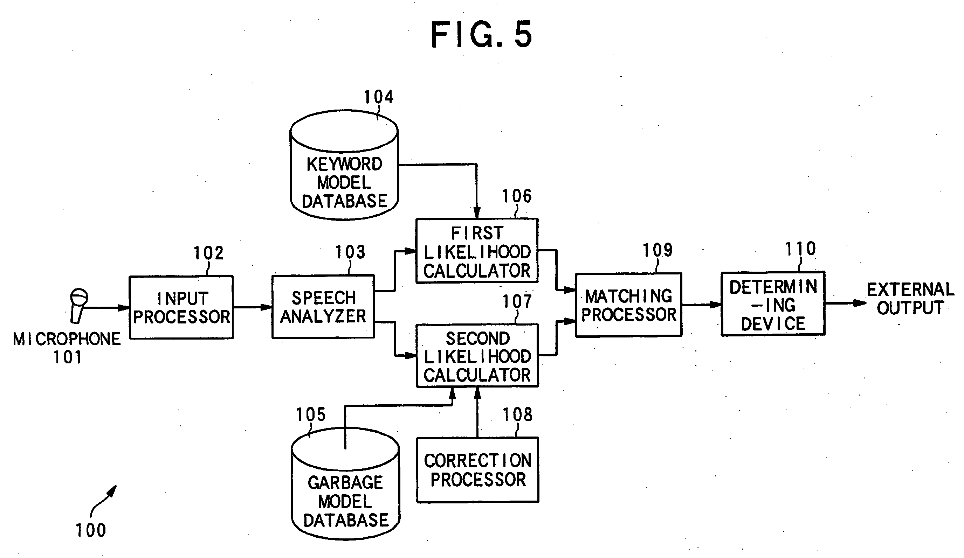

Next, configuration of the speech recognition apparatus according to this embodiment will be described with reference to FIG. 5.

FIG. 5 is a diagram showing the configuration of the speech recognition apparatus according to the first embodiment of the present invention.

As shown in FIG. 5, the speech recognition apparatus 100 comprises: a microphone 101 which receives spontaneous speech and converts it into electrical signals (hereinafter referred to as speech signals); input processor 102 which extracts speech signals that is matched with speech sounds from the inputted speech signals and splits frames at a preset time interval; speech analyzer 103 which extracts a feature value of a speech signal in each frame; keyword model database 104 which prestores keyword HMMs which represent feature patterns of a plurality of keywords to be recognized; garbage model database 105 which prestores the extraneous-speech component HMM which represents feature patterns of extraneous-speech to be distinguished from the keywords; first likelihood calculator 106 which calculates the likelihood that the extracted feature value of each frame match the keyword HMMs; second likelihood calculator 107 which calculates the likelihood that the extracted feature value of each frame match the extraneous-speech component HMMs; correction processor 108 which makes corrections based on the noise level of collected surrounding sounds when calculating likelihood for each frame based on the feature value of the frame and extraneous-speech component HMM; matching processor 109 which performs a matching process (described later) based on the likelihood calculated on a frame-by-frame HMMs basis; and determining device 110 which determines the keywords contained in the spontaneous speech based on the results of the matching process.

The speech analyzer 103 serves as extraction device of the present invention, the keyword model database 104 and garbage model database 105 serve as storage device of the present invention. The first likelihood calculator 106 and second likelihood calculator 107 serve as calculation device and acquisition device of the present invention, the matching processor 109 and determining device 110 serve as determining device of the present invention.

In the input processor 102, the speech signals outputted from the microphone 101 is inputted. In the input processor 102 extracts those parts of the speech signals which represent speech segments of spontaneous speech from the inputted speech signals, divides the extracted parts of the speech signals into time interval frames of a predetermined duration, and outputs them to the speech analyzer 103.

For example, a frame has a duration about 10 ms to 20 ms.

The speech analyzer 103 analyzes the inputted speech signals frame by frame, extracts the feature value of the speech signal in each frame, and outputs it to the likelihood calculator 106.

Specifically, the speech analyzer 103 extracts spectral envelope data that represents power at each frequency at regular time intervals or cepstrum data obtained from an inverse Fourier transform of the logarithm of the power spectrum as the feature values of a speech segment on a frame-by-frame basis, converts the extracted feature values into vectors, and outputs the vectors to the first likelihood calculator 106 and the second likelihood calculator 107.

The keyword model database 104 prestores keyword HMMs which represent pattern data of the feature values of the keywords to be recognized. Data of these stored a plurality of keyword HMMs represent patterns of the feature values of a plurality of the keywords to be recognized.

For example, if it is used in navigation system mounted a mobile, the keyword model database 104 is designed to store HMMs which represent patterns of feature values of speech signals including destination names or present location names or facility names such as restaurant names for the mobile.

As described above, according to this embodiment, an HMM which represents a feature pattern of a speech segment of each keyword represents a probability model which has spectral envelope data that represents power at each frequency at regular time intervals or cepstrum data obtained from an inverse Fourier transform of the logarithm of the power spectrum.

Since a keyword normally consists of a plurality of phonemes or syllables as is the case with "present location" or "destination," according to this embodiment, one keyword HMM consists of a plurality of keyword component HMMs and the first likelihood calculator 106 calculates frame-by-frame feature values and likelihood of each keyword component HMM.

In this way, the keyword model database 104 stores each keyword HMMs of the keywords to be recognized, that is, keyword component HMMs.

The garbage model database 105 prestores the HMM "the extraneous-speech component HMM" which is a language model used to recognize the extraneous speech and represents pattern data of feature values of extraneous-speech components.

According to this embodiment, the garbage model database 105 stores one HMM which represents feature values of extraneous-speech components. For example, if a unit of syllable-based HMM is stored, this extraneous-speech component HMM contains feature patterns which cover features of all syllables such as the Japanese syllablary, nasal, voiced consonants, and plosive consonants.

Generally, to generate an HMM of a feature value for each syllable, speech data of each syllables uttered by multiple people is preacquired, the feature pattern of each syllable is extracted, and feature pattern data of each syllable is learned based on the each syllable-based feature pattern. According to this embodiment, however, when generating the speech data, an HMM of all feature patterns is generated based on speech data of all syllables and the single HMM-- a language model—is generated which represents the feature values of a plurality of syllables.

Thus, according to this embodiment, based on the generated feature pattern data, the single HMM, which is a language model, has feature patterns of all syllables is generated, and it is converted into a vector, and prestored in the garbage model database 105.

In he first likelihood calculator 106, the feature vector of each frame is inputted. Then, by comparing the feature values of each inputted frames and the feature values of keyword HMMs stored in the keyword model database 104, the first likelihood calculator 106 calculates the likelihood of a match between each frame and each keyword HMM, and outputs the calculated likelihood to the matching processor 109.

According to this embodiment, the first likelihood calculator 106 calculates probabilities, including the probability of each frame corresponding to each HMM stored in the keyword model database 104 based on each feature values of each frames and the feature values of the HMMs stored in the keyword model database 104.

Specifically, the first likelihood calculator 106 calculates output probability which represents the probability of each frame corresponding to each keyword component HMM. Furthermore, it calculates state transition probability which represents the probability that a state transition from an arbitrary frame to the next frame is matched with a state transition from each keyword component HMM to another keyword component HMM or an extraneous-speech component. Then, the first likelihood calculator 106 outputs these calculated probabilities as likelihoods to the matching processor 109.

Incidentally, state transition probabilities include probabilities of a state transition from a keyword component HMM to the same keyword component HMM as well.

Furthermore, the first likelihood calculator 106 outputs each output probability and each state transition probability calculated for each frame as likelihood for each frame to the matching processor 109.

In the second likelihood calculator 107, a correction value outputted by the correction processor 108 and each feature vector of each frame are inputted. Then, by comparing the feature values of inputted frames and the feature value of the extraneous-speech component HMM stored in the garbage model database 105 and by adding the correction value, the second likelihood calculator 107 calculates the likelihood of a match between each frame and the extraneous-speech component HMM.

According to this embodiment, based on the feature value of each frame and the feature value of the component HMM stored in the garbage model database 105, the second likelihood calculator 107 calculates the probability of each frame corresponding to the HMM stored in the garbage model database 105.

Specifically, the second likelihood calculator 107 calculates output probability which represents the probability of each frame corresponding to the extraneous-speech component HMM. Furthermore, it calculates state transition probability which represents the probability that a state transition from an arbitrary frame to the next frame is matched with a state transition from an extraneous-speech component to each keyword component HMM. Then, the second likelihood calculator 107 outputs these calculated probabilities as likelihoods to the matching processor 109.

Incidentally, state transition probabilities include probabilities of a state transition from an extraneous-speech component HMM to the same extraneous-speech component HMM as well.

The second likelihood calculator 107 outputs each output probability and each state transition probability calculated for each frame as likelihood for each frame to the matching processor 109.

In the correction processor 108, surrounding sounds of spontaneous speech collected by a microphone (not shown) are inputted, the correction processor 108 calculates a correction value based on the inputted surrounding sounds, and outputs the correction value to the second likelihood calculator 107 to set the correction value therein.

For example, according to this embodiment, the correction value for the extraneous-speech component HMM is calculated based on the noise level of the collected surrounding sounds. Specifically, when the noise level is equal or under -56 dB, the correction value $\alpha$ is given by Eq. (4).

$$\alpha \; = \; \beta \; \times \; \left(-\;0\,.\,10\;\right) \qquad\qquad\qquad \text{Eq. (4)}$$

Incidentally $\beta$ represents the likelihood calculated by the extraneous-speech component HMM. When the noise level is -55 dB to -40 dB, the correction value $\alpha$ is given by Eq. (5).

$$\alpha \; = \; \beta \; \times \; \left(-\;0\,.\,05\;\right) \qquad\qquad\qquad \text{Eq. (5)}$$

When the noise level is -39 dB to -0 dB, no correction value is used and the zero correction value is set in the second likelihood calculator 107.

In the matching processor 109, each frame-by-frame output probabilities and each (inputted) state transition probabilities are inputted, the matching processor 109 performs a matching process to calculate cumulative likelihood, which is the likelihood of each combination of each keyword component HMM and the extraneous-speech component HMM, based on each inputted output probabilities and each (inputted) state transition probabilities, and outputs the cumulative likelihood to the determining device 110.

Specifically, the matching processor 109 calculates one cumulative likelihood for each keyword (as described later), and cumulative likelihood without a keyword, i.e., cumulative likelihood of the extraneous-speech component model alone.

Incidentally, details of the matching process performed by the matching processor 109 will be described later.

In the determining device 110, the cumulative likelihood of each keyword which is calculated by the matching processor 109 is inputted, and the determining device 110 outputs the keyword with the highest cumulative likelihood determines it as a keyword contained in the spontaneous speech externally.

In deciding on the keyword, the determining device 110 uses the cumulative likelihood of the extraneous-speech component model alone as well. If the extraneous-speech component model used alone has the highest cumulative likelihood, the determining device 110 determines that no keyword is contained in the spontaneous speech and outputs this result externally.

Next, description will be given about the matching process performed by the matching processor 109 according to this embodiment.

The matching process according to this embodiment calculates the cumulative likelihood of each combination of a keyword model and an extraneous-speech component model using the Viterbi algorithm.

The Viterbi algorithm is an algorithm which calculates the cumulative likelihood based on the output probability of entering each given state and the transition probability of transitioning from each state to another state, and then outputs the combination whose cumulative likelihood has been calculated after the cumulative probability.

Generally, the cumulative likelihood is calculated first by integrating each Euclidean distance between the state represented by the feature value of each frame and the feature value of the state represented by each HMM, and then is calculated by calculating the cumulative distance.

Specifically, the Viterbi algorithm calculates cumulative probability based on a path which represents a transition from an arbitrary state i to a next state j, and thereby extracts each paths, i.e., connections and combinations of HMMs, through which state transitions can take place.

In this embodiment, the first likelihood calculator 106 and the second likelihood calculator 107 calculate each output probabilities and each state transition probabilities by matching the output probabilities of keyword models or the extraneous-speech component model and thereby state transition probabilities against the frames of the inputted spontaneous speech one by one beginning with the first divided frame and ending with the last divided frame, calculates the cumulative likelihood of an arbitrary combination of a keyword model and extraneous-speech components from the first divided frame to the last divided frame, determines the arrangement which has the highest cumulative likelihood in each keyword model/extraneous-speech component combination by each keyword model, and outputs the determined cumulative likelihoods of the keyword models one by one to the determining device 110.

For example, in case where the keywords to be recognized are "present location" and "destination" and the inputted spontaneous speech entered is "er, present location", the matching process according to this embodiment is performed as follows.

It is assumed here that extraneous speech is "er," that the garbage model database 105 contains one extraneous-speech component HMM which represents features of all extraneous-speech components, that the keyword database contains HMMs of each syllables of "present" and "destination," and that each output probabilities and state transition probabilities calculated by the likelihood calculator 106 and the second likelihood calculator 107 have already been inputted in the matching processor 109.

In such a case, according to this embodiment, the Viterbi algorithm calculates cumulative likelihood of all arrangements in each combination of the keyword and extraneous-speech components for the keywords "present" and "destination" based on the output probabilities and state transition probabilities.

Specifically, when an arbitrary spontaneous speech is inputted, cumulative likelihoods of the following patterns of each combination are calculated based on the output probabilities and state transition probabilities: "p-r-e-se-n-t ####," "# p-r-e-se-n-t ####," "## p-r-e-se-n-t ##," "### p-r-e-se-n-t #," and "#### p-r-e-se-n-t" for the keyword of "p-r-e-se-n-t" and "d-e-s-t-i-n-a-ti-o-n ####," "# d-e-s-t-i-n-a-ti-o-n ###," "## d-e-s-t-i-n-a-ti-o-n ##," "### d-e-s-t-i-n-a-ti-o-n #," and "#### d-e-s-t-i-n-a-ti-o-n" for the keyword of "destination" (where # indicates an extraneous-speech component).

The Viterbi algorithm calculates the cumulative likelihoods of all combination patterns over all the frame of spontaneous speech beginning with the first frame for each keyword, in this case, "present location" and "destination."

Furthermore, in the process of calculating the cumulative likelihoods of each arrangement for each keyword, the Viterbi algorithm stops calculation halfway for those arrangements which have low cumulative likelihood, determining that the spontaneous speech do not match those combination patterns.

Specifically, in the first frame, either the likelihood of the HMM of "p," which is a keyword component HMM of the keyword "present location," or the likelihood of the extraneous-speech component HMM is included in the calculation of the cumulative likelihood. In this case, a higher cumulative likelihood provides the calculation of the next cumulative likelihood. In the above example, the likelihood of the extraneous-speech component HMM is higher than the likelihood of the HMM of "p," and thus calculation of the cumulative likelihood for "p-r-e-se-n-t ####" is terminated after "p."

Thus, in this type of matching process, only one cumulative likelihood is calculated for each keyword "present location" and "destination."

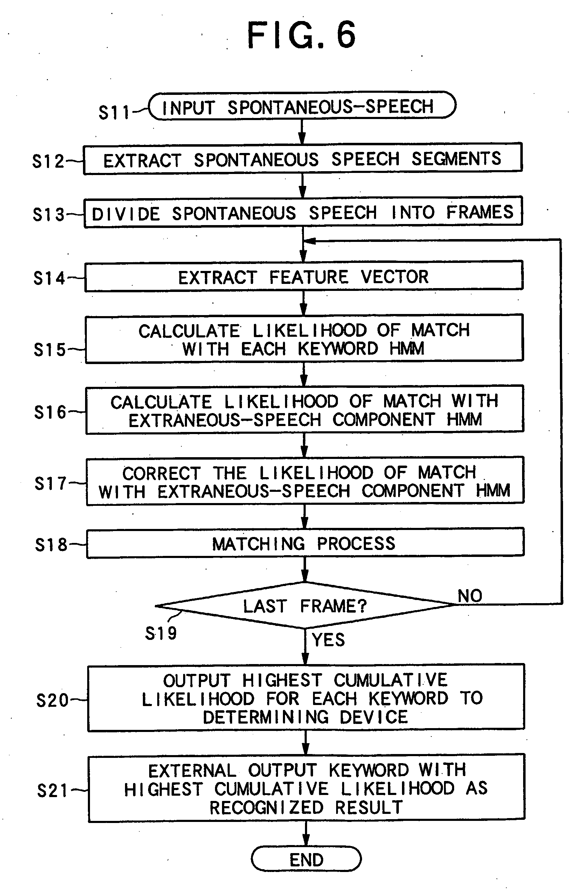

Next, a keyword recognition process according to this embodiment will be described with reference to FIG. 6.

FIG. 6 is a flowchart showing operation of the keyword recognition process according to this embodiment.

First, when a control panel or controller (not shown) inputs instructions each part to start a keyword recognition process and spontaneous speech is inputted the microphone 101 (Step S11), the input processor 102 extracts speech signals of the spontaneous speech from inputted speech signals (Step S12), divides the extracted speech signals into frames of a predetermined duration, and outputs them to the speech analyzer 103 by each frame (Step S13).

Then, the following processes are performed on a frame-by-frame basis.

First, the speech analyzer 103 extracts the feature value of the inputted speech signal in each frame, and outputs it to the first likelihood calculator 106 and second likelihood calculator 107 (Step S14).

Specifically, based on the speech signal in each frame, the speech analyzer 103 extracts spectral envelope data that represents power at each frequency at regular time intervals or cepstrum data obtained from an inverse Fourier transform of the logarithm of the power spectrum as the feature values of a speech segment converts the extracted feature values into vectors, and outputs the vectors to the first likelihood calculator 106 and second likelihood calculator 107.

Next, the first likelihood calculator 106 compares the feature value of the inputted frame with the feature values of each HMMs stored in the keyword model database 104, calculates the output probability and state transition probability of the frame with respect to each HMM model (as described above), and outputs the calculated output probabilities and state transition probabilities to the matching processor 109 (Step S15).

Next, the second likelihood calculator 107 compares the feature value of the inputted frame with the feature value of the extraneous-speech component HMM model stored in the garbage model database 105, calculates the output probability and state transition probability of the frame with respect to the extraneous-speech component HMM (as described above) (Step S16).

Then, the second likelihood calculator obtains the correction value calculated in advance by the correction processor 108 using the method described above, adds the correction value to the output probability and state transition probability of the frame with respect to the extraneous-speech component HMM, and outputs the resulting output probability and state transition probability (with correction value) to the matching processor 109 (Step S17).

Next, the matching processor 109 calculates the cumulative likelihood of each keyword in the matching process described above (Step S18).

Specifically, the matching processor 109 integrates each likelihoods of each keyword HMM and the extraneous-speech component HMM, and eventually calculates only the highest cumulative likelihood for the type of each keyword.

Then, at the instruction of the controller (not shown), the matching processor 109 determines whether the given frame is the last divided frame (Step S19). If the matching processor 109 determines as the last divided frame, the matching processor 109 outputs the highest cumulative likelihood for each keyword to the determining device 110 (Step S20). If the frame is not determined as the last divided one, this operation performs the process of Step S14.

Finally, based on the cumulative likelihood of each keyword, the determining device 110 outputs the keyword with the highest cumulative likelihood as the keyword contained in the spontaneous speech externally (Step S21). This concludes the operation.

Thus, according to this embodiment, since keywords and spontaneous speech are identified properly based on the stored extraneous-speech component feature data, the extraneous speech can be identified properly using a small amount of data, making it possible to increase identifiable extraneous speech without increasing the amount of data needed for recognition of extraneous speech and improve the accuracy with which keywords are extracted and recognized.

Specifically, when the garbage model are generated with feature values of speech segment of a plurality of extraneous words, relatively low likelihoods of each HMMs are accumulated over the entire spontaneous speech during speech recognition. Consequently, a combination of extraneous speech HMM and a keyword HMM to be recognized may have a lower cumulative likelihood than the one calculated for other combination of other keyword HMM and extraneous speech HMM which is matched accidentally. In that case, surrounding sounds such as noise around where the spontaneous speech is uttered may cause misrecognition if they are loud enough to be picked up by the speech recognition apparatus.

However, according to this embodiment, since the likelihood of a match between the extracted spontaneous-speech feature values and the extraneous-speech feature HMM is calculated by using a preset correction value and at least either the keywords to be recognized or the extraneous speech contained in the spontaneous speech is determined based on the calculated likelihood, identifiable extraneous speech can be increase without increasing the amount of data needed for recognition of extraneous speech and the accuracy with which keywords are extracted and recognized is improved.

Furthermore, according to this embodiment, since the likelihood of a match between the extracted spontaneous-speech feature values and the extraneous-speech feature HMM is calculated by using a preset correction value, the calculated likelihood can be adjusted.

Consequently, even under conditions in which misrecognition could occur due to noise level around where the spontaneous speech is uttered or due to calculation error produced when preparing extraneous-speech feature data by combining characteristics of a plurality of feature values to reduce the amount of data, the likelihood of a match between the extracted spontaneous-speech feature values and the extraneous-speech feature data can be adjusted by using a correction value. This makes it possible to identify the extraneous speech and keywords properly, which in turn makes it possible to prevent misrecognition and recognize keywords reliably.

Incidentally, although extraneous-speech component models are generated based on syllables according to this embodiment, of course, they may be generated based on phonemes or other units.

Furthermore, although one extraneous-speech component HMM is stored in the garbage model database 105 according to this embodiment, an HMM which represents feature values of extraneous-speech components may be stored for each group of a plurality of each type of phonemes, or each vowels, consonants.

In this case, the feature values computed on a frame-by-frame basis in the likelihood calculation process will be the extraneous-speech component HMM and likelihood of each extraneous-speech component.

Furthermore, although the keyword recognition process is performed by the speech recognition apparatus described above according to this embodiment, the speech recognition apparatus may be equipped with a computer and recording medium and a similar keyword recognition process may be performed as the computer reads a keyword recognition program stored on the recording medium.

Here, a DVD or CD may be used as the recording medium.

In this case, the speech recognition apparatus will be equipped with a reading device for reading the program from the recording medium.

Although according to this embodiment, the correction value is added to the likelihood of a match between the extraneous-speech component HMM and feature values of frames based on the noise level of surrounding sounds around where the spontaneous speech is uttered, it is also possible to use a correction value calculated empirically in advance.

In this case, for example, the correction value is obtained by multiplying the likelihood calculated in a normal manner by $\pm 0.1$. Thus, the correction value $\alpha$ is given by Eq. (6).

$$\alpha \;=\; \beta \;\times\; (\pm\, 0.10\,) \qquad\qquad \text{Eq. (6)}$$

Incidentally β represents the likelihood calculated by the extraneous-speech component HMM.

[Second embodiment]

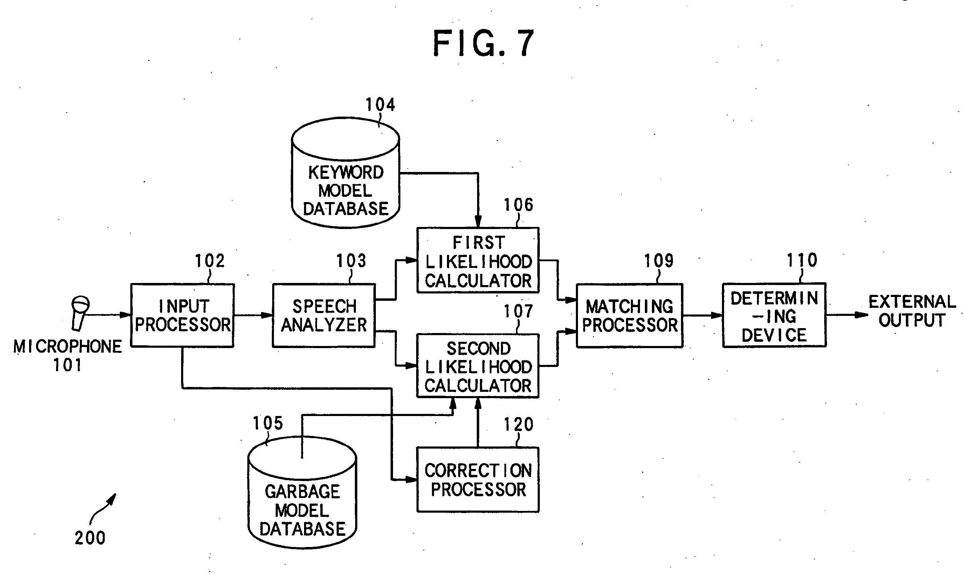

FIGS. 7 to 8 are diagrams showing a speech recognition apparatus according to a fourth embodiment of the present invention.

This embodiment differs from the first embodiment in that a correction value is calculated by using the word length of the keyword to be recognized, i.e., the length ratio between spontaneous speech and the keyword contained in the spontaneous speech instead of a setting operation of a correction value calculated based on the noise level of the surrounding sounds collected by the correction processor. In other respects, the configuration of this embodiment is similar to that of the first embodiment. Thus, the same components as those in the first embodiment are denoted by the same reference numerals as the corresponding components and description thereof will be omitted.

First, configuration of the speech recognition apparatus according to this embodiment will be described with reference to FIG. 7.

As shown in FIG. 7, the speech recognition apparatus 200 comprises a microphone 101, input processor 102, speech analyzer 103, keyword model database 104, garbage model database 105, first likelihood calculator 106, second likelihood calculator 107, correction processor 120 which makes corrections based on the lengths of the keyword and spontaneous speech when calculating likelihood for each frame based on the feature value of the frame and extraneous-speech component HMM, matching processor 109, and determining device 110.

In the correction processor 120, the inputted keyword length acquired by the determining device 110 and the inputted length of spontaneous speech acquired by the input processor 102 are inputted. Furthermore, the correction processor 120 calculates the ratio of the keyword length to the length of the spontaneous speech, calculates a correction value based on the calculated ratio of the keyword length, and outputs the calculated correction value to the second likelihood calculator 107.

Specifically, when the length ratio is 0% to 39%, the correction value α is given by Eq. (7).

$$\alpha \; = \; \beta \; \times \; \left( -\, 0 \,.\, 10 \; \right) \qquad\qquad \text{Eq. (7)}$$

Incidentally, β represents the likelihood calculated by the extraneous-speech component HMM. When the length ratio is 40% to 74%, no correction value is used.

When the length ratio is 75% to 100%, the correction value α is given by Eq. (8).

$$\alpha \; = \; \beta \; \times \; 0 \,.\, 10 \qquad\qquad \text{Eq. (8)}$$

These correction values are output to the likelihood calculator 106.

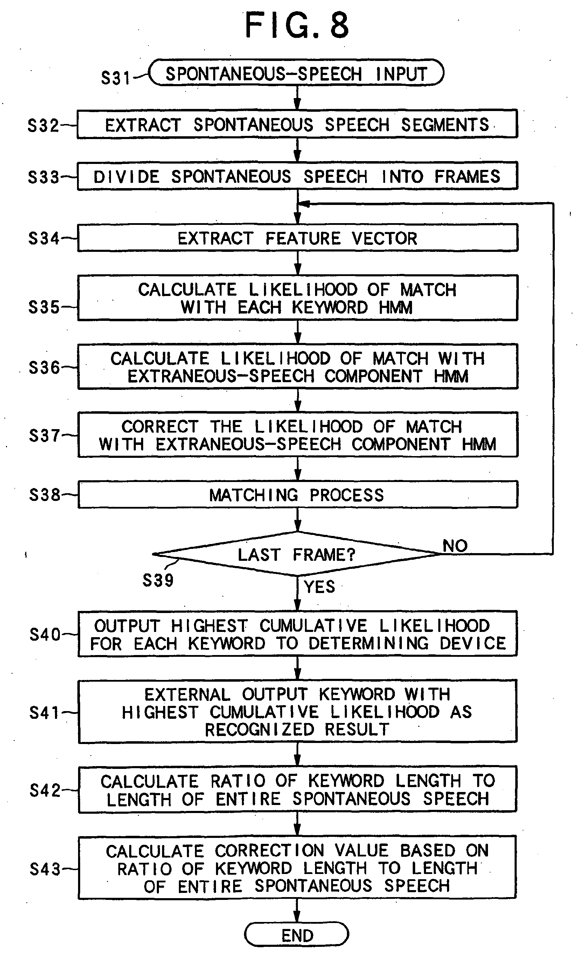

Next, a keyword recognition process according to this embodiment will be described with reference to FIG. 8.

FIG. 8 is a flowchart showing operation of the keyword recognition process according to this embodiment.

First, when a control panel or controller (not shown) inputs instruction each part to start a keyword recognition process and spontaneous speech are inputted to the microphone 101 (Step S31), the input processor 102 extracts speech signals of the spontaneous speech from inputted speech signals (Step S32), divides the extracted speech signals into frames of a predetermined duration, and outputs them to the speech analyzer 103 by each frame (Step S33).

Then, the following processes are performed on each frame-by-frame basis.

First, the speech analyzer 103 extracts the feature value of the speech signal in each frame, and outputs it to the first likelihood calculator 106 (Step S34).

Specifically, based on the speech signal in each frame, the speech analyzer 103 extracts spectral envelope data that represents power at each frequency at regular time intervals or cepstrum data obtained from an inverse Fourier transform of the logarithm of the power spectrum as the feature values of a speech segment, converts the extracted feature values into vectors, and outputs the vectors to the first likelihood calculator 106 and second likelihood calculator 107.

Next, the first likelihood calculator 106 compares the feature value of the inputted frame with the feature values of each HMMs stored in the keyword model database 104, calculates the output probability and state transition probability of the frame with respect to each HMM model (as described above), and outputs the calculated output probabilities and state transition probabilities to the matching processor 109 (Step S35).

Next, the second likelihood calculator 107 compares the feature value of the inputted frame with the feature value of the extraneous-speech component model HMM stored in the garbage model database 105, and thereby calculates the output probability and state transition probability of the frame with respect to the extraneous-speech component HMM (as described above) (Step S36).

Then, the second likelihood calculator obtains the correction value calculated in advance by the correction processor 120 using the method described above, adds the correction value to the output probability and state transition probability of the frame with respect to the extraneous-speech component HMM, and outputs the resulting output probability and state transition probability to the matching processor 109 (Step S37).

The matching processor 109 calculates the cumulative likelihood of each keyword in the matching process described above (Step S38).

Specifically, the matching processor 109 integrates each likelihoods of each inputted keyword HMM and the extraneous-speech component HMM, and eventually calculates only the highest cumulative likelihood for each type of the keyword.

Then, at the instruction of the controller (not shown), the matching processor 109 determines whether the given frame is the last divided frame (Step S39). If it is determined as the last divided frame, the matching processor 109 outputs the highest cumulative likelihood for each calculated keyword to the determining device 110 (Step S40). If the frame is not determined as the last divided one, this operation performs the process of Step S34.

Then, based on the cumulative likelihood of each keyword, the determining device 110 outputs the keyword with the highest cumulative likelihood as the keyword contained in the spontaneous speech (Step S41).

Next, the correction processor 120 obtains the length of the spontaneous speech from the input processor 102 and the keyword length from the determining device 110 and calculates the ratio of the keyword length to the length of the spontaneous speech (Step S42).

Finally, based on the calculated ratio of the keyword length to the length of the spontaneous speech, the correction processor 120 calculates the correction value described above (Step S43), and stores it for use in the next operation. This concludes the current operation.

Thus, according to this embodiment, since keywords and spontaneous speech are identified properly based on the stored extraneous-speech component feature data, the extraneous speech can be identified properly by using a small amount of data, making it possible to increase identifiable extraneous speech without increasing the amount of data needed for recognition of extraneous speech and improve the accuracy with which keywords are extracted and recognized.

Furthermore, according to this embodiment, since the likelihood of a match between the extracted spontaneous-speech feature values and the extraneous-speech feature HMM using a preset correction value is calculated, the likelihood using the preset correction value can be adjusted.

Consequently, even under conditions in which misrecognition could occur due to calculation error produced when preparing extraneous-speech feature data by combining characteristics of a plurality of feature values to reduce the amount of data, the likelihood of a match between the extracted spontaneous-speech feature values and the extraneous-speech feature data can be adjusted by using a correction value. This makes it possible to identify the extraneous speech and keywords properly, which in turn makes it possible to prevent misrecognition and recognize keywords reliably.

Incidentally, although extraneous-speech component models are generated based on syllables according to this embodiment, of course, they may be generated based on phonemes or other units.

Furthermore, although one extraneous-speech component HMM is stored in the garbage model database 105 according to this embodiment, an HMM which represents feature values of extraneous-speech components may be stored for each group of a plurality of each type of phonemes, or each vowels, consonants.

In that case, the feature values computed on a frame-by-frame basis in the likelihood calculation process will be the extraneous-speech component HMM and likelihood of each extraneous-speech component.

Furthermore, although the keyword recognition process is performed by the speech recognition apparatus described above according to this embodiment, the speech recognition apparatus may be equipped with a computer and recording medium and a similar keyword recognition process may be performed as the computer reads a keyword recognition program stored on the recording medium.

On the speech recognition apparatus which executes the keyword recognition program, a DVD or CD may be used as the recording medium.

In that case, the speech recognition apparatus will be equipped with a reading device for reading the program from the recording medium.

**Claims**

1. A speech recognition apparatus for recognizing at least one of keywords contained in uttered spontaneous speech, said apparatus comprising:

an extraction device for extracting a spontaneous-speech feature value, which is feature value of speech segment of the spontaneous speech, by analyzing the spontaneous speech;

a database (104, 105) in which at least one of keyword feature (10) data indicating feature value of speech segment of said keyword and at least one of an extraneous-speech feature data indicating feature value of speech segment of extraneous-speech is prestored,

a calculation device (106, 107) for calculating likelihood which indicates probability that at least part of the feature values of the extracted spontaneous speech is matched with said keyword feature data and said extraneous-speech feature data;

a determining device (109, 110) for determining at least one of said keywords to be recognized and said extraneous-speech based on the calculated likelihood,

wherein the calculation device (106, 107) calculates the likelihood by using a predetermined correction value when said calculation device (106, 107) calculates the likelihood which indicates probability that at least part of the feature values of the extracted spontaneous speech is matched with said extraneous-speech feature data; and **characterised by**

a setting device for setting the correction value based on noise level around where the spontaneous speech is uttered, wherein the calculation device (106, 107) calculates the likelihood by using the set correction value when said calculation device (106, 107) calculates the likelihood which indicates probability that at least part of the feature values of the extracted spontaneous speech is matched with said extraneous-speech feature data.

2. A speech recognition apparatus for recognizing at least one of keywords contained in uttered spontaneous speech, said apparatus comprising:

an extraction device for extracting a spontaneous-speech feature value, which is feature value of speech segment of the spontaneous speech, by analyzing the spontaneous speech;

a database (104, 105) in which at least one of keyword feature data indicating feature value of speech segment of said keywords and at least one of an extraneous-speech feature data indicating feature value of speech segment of extraneous-speech is prestored,

a calculation device (106, 107) for calculating likelihood which indicates probability that at least part of the feature values of the extracted spontaneous speech is matched with said keyword feature data and said extraneous-speech feature data;

a determining device (109, 110) for determining at least one of said keywords to be recognized and said extraneous-speech based on the calculated likelihood,

wherein the calculation device (106, 107) calculates the likelihood by using a predetermined correction value when said calculation device (106, 107) calculates the likelihood which indicates probability that at least part of the feature values of the extracted spontaneous speech is matched with said extraneous-speech feature data; and **characterized by**

a setting device for setting the correction value based on the ratio between duration of the determined keyword and duration of the spontaneous speech when the determining device (109, 110) determines at least one of said keywords to be recognized and said extraneous speech based on the calculated likelihood, wherein said calculation device (106, 107) calculates the likelihood by using the set correction value when said calculation device (106, 107) calculates the likelihood which indicates probability that at least part of the feature values of the extracted spontaneous speech is matched with said extraneous-speech feature data.

3. The speech recognition apparatus according to any of claims 1 or 2, wherein said extraneous-speech feature data prestored in said database (104, 105) has data of feature values of speech segment of a plurality of the extraneous-speech.

4. The speech recognition apparatus according to any one of claims 1 to 3, in case where an extraneous-speech component feature data indicating feature value of speech segment of extraneous-speech component which is component of the extraneous speech is prestored in said database (104, 105), wherein:

said calculation device (106, 107) for calculating likelihood based on said extraneous-speech component feature data when said calculation device (106, 107) calculates the likelihood which indicates probability that at least part of the feature values of the extracted spontaneous speech is matched with said extraneous-speech feature data, and

said determining device (109, 110) for determining at least one of said keywords to be recognized and said extraneous-speech based on the calculated likelihood.

5. A speech recognition method of recognizing at least one of keywords contained in uttered spontaneous speech, said method comprising:

an extraction process of extracting a spontaneous-speech feature value, which is feature value of speech segment of the spontaneous speech, by analyzing the spontaneous speech;

an acquiring process of acquiring at least one of keyword feature data indicating feature value of speech segment of said keyword and at least one of an extraneous-speech feature data indicating feature value of speech segment of extraneous-speech, said keyword feature data and extraneous-speech feature data prestoring in a database (104, 105);

a calculation process of calculating likelihood which indicates probability that at least part of the feature values of the extracted spontaneous speech is matched with said keyword feature data and said extraneous-speech feature data;

a determination process of determining at least one of said keywords to be recognized and said extraneous-speech based on the calculated likelihood, wherein said calculation process calculates the likelihood by using a predetermined correction value when said calculation process calculates the likelihood which indicates probability that at least part of the feature values of the extracted spontaneous speech is matched with said extraneous-speech feature data; and **characterized by**

a setting process of setting the correction value based on noise level around where the spontaneous speech is uttered,

wherein said calculation process calculates the likelihood by using the set correction value when said calculation process calculates the likelihood which indicates probability that at least part of the feature values of the extracted spontaneous speech is matched with said extraneous-speech feature data.

6. A speech recognition method of recognizing at least one of keywords contained in uttered spontaneous speech, said method comprising:

an extraction process of extracting a spontaneous-speech feature value, which is feature value of speech segment of the spontaneous speech, by analyzing the spontaneous speech;

an acquiring process of acquiring at least one of keyword feature data indicating feature value of speech segment of said keyword and at least one of an extraneous-speech feature data indicating feature value of speech segment of extraneous-speech, said keyword feature data and extraneous speech feature data prestoring in a database (104, 105);

a calculation process of calculating likelihood which indicates probability that at least part of the feature values of the extracted spontaneous speech is matched with said keyword feature data and said extraneous-speech feature data;

a determination process of determining at least one of said keywords to be recognized and said extraneous-speech based on the calculated likelihood, wherein said calculation process calculates the likelihood by using a predetermined correction value when said calculation process calculates the likelihood which indicates probability that at least part of the feature values of the extracted spontaneous speech is matched with said extraneous-speech feature data; and **characterized by**

a setting process of setting the correction value based on the ratio between duration of the determined keyword arid duration of the spontaneous speech when the determination process determines at least one of said keywords to be recognized and said extraneous speech based on the calculated likelihood,

wherein said calculation process calculates the likelihood by using the set correction value when said calculation process calculates the likelihood which indicates probability that at least part of the feature values of the extracted spontaneous speech is matched with said extraneous-speech feature data.

7. The speech recognition method according to any of claims 5 or 6, wherein said extraneous-speech feature data prestored in said database (104, 105) has data of feature values of speech segment of a plurality of the extraneous-speech.

8. The speech recognition method according to any one of claims 5 to 7, in case where an extraneous-speech component feature data indicating feature value of speech segment of extraneous-speech component which is component of the extraneous speech is prestored in said database (104, 105), wherein:

said calculation process of calculating likelihood based on said extraneous-speech component feature data when said calculation process calculates the likelihood which indicates probability that at least part of the feature values of the extracted spontaneous speech is matched with said extraneous-speech feature data, and said determination process of determining at least one of said keywords to be recognized and said extraneous-speech based on the calculated likelihood.

9. A recording medium wherein a speech recognition program is recorded so as to be read and executed by a computer, the computer being adapted to control a speech precognition speech precognition apparatus for recognizing at least one of keywords contained in uttered spontaneous speech, said program causing the computer to execute :

a step of extracting a spontaneous-speech feature value, which is feature value of speech segment of the spontaneous speech, by analyzing the spontaneous speech;
a step of acquiring at least one of keyword feature data indicating feature value of speech segment of said keyword and at least one of an extraneous-speech feature data indicating feature value of speech segment of extraneous-speech, said keyword feature data and extraneous-speech feature data prestoring in a database (104, 105)
a step (106,107) of calculating a likelihood which indicates the probability that at least part of the feature values of the extracted spontaneous speech is matched with said keyword feature data and said extraneous-speech feature data;
a step (109,110) of determining at least one of said keywords to be recognized and said extraneous-speech based on the calculated likelihood,

wherein said calculation step (106, 107) calculates the likelihood by using a predetermined correction value when said calculation step (106, 107) calculates the likelihood which indicates probability that at least part of the feature values of the extracted spontaneous speech is matched with said extraneous-speech feature data; and **characterized by**
a step of setting the correction value based on noise level around where the spontaneous speech is uttered, and wherein said calculation step (106, 107) calculates the likelihood by using the set correction value when said calculation step (106, 107) calculates the likelihood which indicates probability that at least part of the feature values of the extracted spontaneous speech is matched with said extraneous-speech feature data.

10. A recording medium wherein a speech recognition program is recorded so as to be read and executed by a computer, the computer being adapted to control a speech recognition apparatus for recognizing at least one of keywords contained in uttered spontaneous speech, said program causing the computer to execute the steps of :

a step of extracting a spontaneous-speech feature value, which is feature value of speech segment of the spontaneous speech, by analyzing the spontaneous speech;
a step of acquiring at least one of keyword feature data indicating feature value of speech segment of said keyword and at least one of an extraneous-speech feature data indicating feature value of speech segment of extraneous-speech, said keyword feature data and extraneous-speech feature data prestoring in a database (104, 105)
a step (106,107) of calculating a likelihood which indicates the probability that at least part of the feature values of the extracted spontaneous speech is matched with said keyword feature data and said extraneous-speech feature data;
a step (109,110) of determining at least one of said keywords to be recognized and said extraneous-speech based on the calculated likelihood,

wherein said calculation step (106,107) calculates the likelihood by using a predetermined correction valuewhen said calculation step (106,107) calculates the likelihood which indicates probability that at least part of the feature values of the extracted spontaneous speech is matched with said extraneous-speech feature data; and **characterized by**
a step of setting the correction value based on the ratio between duration of the determined keyword and duration of the spontaneous speech when the determining device (109, 110) determines at least one of said keywords to be recognized and said extraneous speech based on the calculated likelihood, wherein said calculation step (106, 107) calculates the likelihood by using the set correction value when said calculation step (106, 107) calculates the likelihood which indicates probability that at least part of the feature values of the extracted spontaneous speech is matched with said extraneous-speech feature data.

**11.** The recording medium according to one of claims 9 or 10, wherein the program further causes the computer to acquire extraneous-speech feature data prestored in said database (104, 105) which has data of feature values of speech segment of a plurality of the extraneous-speech.

**12.** The recording medium according to any one of claims 9 to 11, in case where an extraneous-speech component feature data indicating feature value of speech segment of extraneous-speech component which is component of the extraneous speech is prestored in said database (104, 105), wherein the program further causes the computer to execute the steps of :

a step (106; 107) of calculating likelihood based on said extraneous-speech component feature data when said calculation step (106, 107) calculates the likelihood which indicates probability that at least part of the feature values of the extracted spontaneous speech is matched with said extraneous-speech feature data, and
a step (109,110) of determining at least one of said keywords to be recognized and said extraneous-speech based on the calculated likelihood.

**Patentansprüche**

**1.** Spracherkennungsvorrichtung zum Erkennen mindestens eines von Schlüsselworten, enthalten in einer geäußerten, spontanen Sprache, wobei die Vorrichtung aufweist:

eine Extraktionsvorrichtung zum Extrahieren eines Merkmalswerts einer spontanen Sprache, der ein Merkmalswert eines Sprachsegments der spontanen Sprache ist, durch Analysieren der spontanen Sprache;
eine Datenbank (104, 105), in der mindestens ein Datenteil eines Schlüsselwort-Merkmals (10) einen Merkmalswert eines Sprachsegments des Schlüsselworts anzeigt und mindestens ein Merkmals-Datenteil einer belanglosen Sprache, der einen Merkmalswert eines Sprachsegments einer belanglosen Sprache anzeigt, vorab gespeichert ist,
eine Berechnungsvorrichtung (106, 107) zum Berechnen einer Wahrscheinlichkeit, die eine Wahrscheinlichkeit anzeigt, dass mindestens ein Teil der Merkmalswerte der extrahierten, spontanen Sprache an die Schlüsselwort-Merkmalsdaten und die Merkmalsdaten der belanglosen Sprache angepasst ist;
eine Bestimmungsvorrichtung (109, 110) zum Bestimmen mindestens eines der Schlüsselworte, um erkannt zu werden, und der belanglosen Sprache basierend auf der berechneten Wahrscheinlichkeit,

wobei die Berechnungsvorrichtung (106, 107) die Wahrscheinlichkeit unter Verwendung eines vorbestimmten Korrekturwerts berechnet, wenn die Berechnungsvorrichtung (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist; und **gekennzeichnet durch**
eine Einstellvorrichtung zum Einstellen des Korrekturwerts basierend auf einem Rauschpegel, im Bereich dessen die spontane Sprache ausgesprochen ist,
wobei die Berechnungsvorrichtung (106, 107) die Wahrscheinlichkeit unter Verwendung des eingestellten Korrekturwerts berechnet, wenn die Berechnungsvorrichtung (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist.

**2.** Spracherkennungsvorrichtung zum Erkennen mindestens eines von Schlüsselworten, enthalten in einer geäußerten, spontanen Sprache, wobei die Vorrichtung aufweist:

eine Extraktionsvorrichtung zum Extrahieren eines Merkmalswerts einer spontanen Sprache, der ein Merkmalswert eines Sprachsegments der spontanen Sprache ist, durch Analysieren der spontanen Sprache;
eine Datenbank (104, 105), in der mindestens ein Datenteil eines Schlüsselwort-Merkmals einen Merkmalswert eines Sprachsegments des Schlüsselworts anzeigt und mindestens ein Datenteil eines belanglosen Sprachmerkmals, das einen Merkmalswert eines Sprachsegments einer belanglosen Sprache anzeigt, vorab gespeichert ist,
eine Berechnungsvorrichtung (106, 107) zum Berechnen einer Wahrscheinlichkeit, die eine Wahrscheinlichkeit anzeigt, dass mindestens ein Teil der Merkmalswerte der extrahierten, spontanen Sprache an die Schlüsselwort-Merkmalsdaten und die Merkmalsdaten der belanglosen Sprache angepasst ist;
eine Bestimmungsvorrichtung (109, 110) zum Bestimmen mindestens eines der Schlüsselworte, um erkannt zu werden, und der belanglosen Sprache basierend auf der berechneten Wahrscheinlichkeit,

wobei die Berechnungsvorrichtung (106, 107) die Wahrscheinlichkeit unter Verwendung eines vorbestimmten Korrekturwerts berechnet, wenn die Berechnungsvorrichtung (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist; und **gekennzeichnet durch**

eine Einstellvorrichtung zum Einstellen des Korrekturwerts basierend auf dem Verhältnis zwischen einer Dauer des bestimmten Schlüsselworts und einer Dauer der spontanen Sprache, wenn die Bestimmungsvorrichtung (109, 110) bestimmt, dass mindestens eines der Schlüsselworte erkannt werden soll und die belanglose Sprache basierend auf der berechneten Wahrscheinlichkeit berechnet wird,

wobei die Berechnungsvorrichtung (106, 107) die Wahrscheinlichkeit unter Verwendung des eingestellten Korrekturwerts berechnet, wenn die Berechnungsvorrichtung (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist.

3. Spracherkennungsvorrichtung nach einem der Ansprüche 1 oder 2, wobei die Merkmalsdaten der belanglosen Sprache, die vorab in der Datenbank (104, 105) gespeichert sind, Daten von Merkmalswerten eines Sprachsegments einer Vielzahl der belanglosen Sprache besitzt.

4. Spracherkennungsvorrichtung nach einem der Ansprüche 1 bis 3, wobei in dem Fall, in dem die Merkmalsdaten einer belanglosen Sprachkomponenten, die einen Merkmalswert eines Sprachsegments einer belanglosen Sprachkomponenten anzeigen, was eine Komponente der belanglosen Sprache ist, vorab in der Datenbank (104, 105) gespeichert werden, mit:

   der Berechnungsvorrichtung (106, 107) zum Berechnen einer Wahrscheinlichkeit basierend auf den Merkmalsdaten der belanglosen Sprachkomponenten dann, wenn die Berechnungsvorrichtung (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst sind, und
   der Bestimmungsvorrichtung (109, 110) zum Bestimmen mindestens eines der Schlüsselworte, das erkannt werden soll, und der belanglosen Sprache, basierend auf der berechneten Wahrscheinlichkeit.

5. Spracherkennungsverfahren zum Erkennen mindestens eines von Schlüsselworten, enthalten in einer geäußerten spontanen Sprache, wobei das Verfahren aufweist:

   einen Extraktionsvorgang eines Extrahierens eines Merkmalswerts einer spontanen Sprache, der ein Merkmalswert eines Sprachsegments der spontanen Sprache ist, durch Analysieren der spontanen Sprache;
   einen Erlangungsvorgang zum Erlangen mindestens eines der Schlüsselwort-Merkmalsdaten, die einen Merkmalswert eines Sprachsegments des Schlüsselworts anzeigen, und mindestens eines der Merkmalsdaten der belanglosen Sprache, die einen Merkmalswert eines Sprachsegments der belanglosen Sprache anzeigen, wobei die Schlüsselwort-Merkmalsdaten und die Merkmalsdaten der belanglosen Sprache vorab in einer Datenbank (104, 105) gespeichert werden;
   einen Berechnungsvorgang zum Berechnen einer Wahrscheinlichkeit, die eine Wahrscheinlichkeit anzeigt, dass mindestens ein Teil der Merkmalswerte der extrahierten, spontanen Sprache an die Schlüsselwort-Merkmalsdaten und die Merkmalsdaten der belanglosen Sprache angepasst sind;
   einen Bestimmungsvorgang zum Bestimmen mindestens eines der Schlüsselworte, um erkannt zu werden, und der belanglosen Sprache basierend auf der berechneten Wahrscheinlichkeit, wobei der Berechnungsvorgang die Wahrscheinlichkeit unter Verwendung eines vorbestimmten Korrekturwerts berechnet, wenn der Berechnungsvorgang die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist; und **gekennzeichnet durch**
   einen Einstellvorgang zum Einstellen des Korrekturwerts basierend auf einem Rauschpegel, im Bereich dessen die spontane Sprache ausgesprochen ist,

wobei der Berechnungsvorgang die Wahrscheinlichkeit unter Verwendung des eingestellten Korrekturwerts berechnet, wenn der Berechnungsvorgang die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist.

6. Spracherkennungsverfahren zum Erkennen mindestens eines von Schlüsselworten, enthalten in einer geäußerten, spontanen Sprache, wobei das Verfahren aufweist:

EP 1 355 296 B1

einen Extraktionsvorgang eines Extrahierens eines Merkmalswerts einer spontanen Sprache, der ein Merkmalswert eines Sprachsegments der spontanen Sprache ist, durch Analysieren der spontanen Sprache;

einen Erlangungsvorgang zum Erlangen mindestens eines der Schlüsselwort-Merkmalsdaten, die einen Merkmalswert eines Sprachsegments des Schlüsselworts anzeigen, und mindestens eines der Merkmalsdaten der belanglosen Sprache, die einen Merkmalswert eines Sprachsegments einer belanglosen Sprache anzeigen, wobei die Schlüsselwort-Merkmalsdaten und die Merkmalsdaten der belanglosen Sprache vorab in einer Datenbank (104, 105) gespeichert werden;

einen Berechnungsvorgang zum Berechnen einer Wahrscheinlichkeit, die eine Wahrscheinlichkeit anzeigt, dass mindestens ein Teil der Merkmalswerte der extrahierten, spontanen Sprache an die Schlüsselwort-Merkmalsdaten und die Merkmalsdaten der belanglosen Sprache angepasst ist;

einen Bestimmungsvorgang zum Bestimmen mindestens eines der Schlüsselworte, um erkannt zu werden, und der belanglosen Sprache basierend auf der berechneten Wahrscheinlichkeit, wobei der Berechnungsvorgang die Wahrscheinlichkeit unter Verwendung eines vorbestimmten Korrekturwerts berechnet, wenn der Berechnungsvorgang die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist; und **gekennzeichnet durch**

einen Einstellvorgang zum Einstellen des Korrekturwerts basierend auf dem Verhältnis zwischen einer Dauer der bestimmten Schlüsselwortdauer der spontanen Sprache, wenn der Bestimmungsvorgang mindestens eines der Schlüsselworte, das erkannt werden soll, bestimmt, und der belanglosen Sprache, basierend auf der berechneten Wahrscheinlichkeit,

wobei der Berechnungsvorgang die Wahrscheinlichkeit unter Verwendung des eingestellten Korrekturwerts berechnet, wenn der Berechnungsvorgang die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist.

7. Spracherkennungsverfahren nach einem der Ansprüche 5 oder 6, wobei die Merkmalsdaten der belanglosen Sprache, vorab gespeichert in der Datenbank (104, 105), Daten von Merkmalswerten eines Sprachsegments einer Vielzahl der belanglosen Sprache besitzen.

8. Spracherkennungsverfahren nach einem der Ansprüche 5 bis 7, in einem Fall, in dem Komponenten-Merkmalsdaten einer belanglosen Sprache, die einen Merkmalswert eines Sprachsegments einer Komponenten einer belanglosen Sprache anzeigen, was eine Komponente der belanglosen Sprache ist, vorab in der Datenbank (104, 105) gespeichert sind, mit:

dem Berechnungsvorgang eines Berechnens einer Wahrscheinlichkeit basierend auf den Komponenten-Merkmalsdaten der belanglosen Sprache dann, wenn der Berechnungsvorgang die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist, und

dem Bestimmungsvorgang eines Bestimmens mindestens eines der Schlüsselworte, das erkannt werden soll, und der belanglosen Sprache basierend auf der berechneten Wahrscheinlichkeit.

9. Aufzeichnungsmedium, wo ein Spracherkennungsprogramm so aufgezeichnet ist, um durch einen Computer gelesen und ausgeführt zu werden, wobei der Computer so angepasst ist, um eine Spracherkennungsvorrichtung zum Erkennen mindestens eines der Schlüsselworte, enthalten in einer ausgesprochenen, spontanen Sprache, zu steuern, wobei das Programm bewirkt, dass der Computer den Schritt eines Extrahierens eines spontanen Sprachmerkmalswerts ausführt, was ein Merkmalswert eines Sprachsegments der spontanen Sprache ist, durch Analysieren der spontanen Sprache;

einen Schritt eines Erlangens mindestens eines von Schlüsselwort-Merkmalsdaten, die einen Merkmalswert eines Sprachsegments des Schüsselworts anzeigen, und mindestens eines Merkmalsdatenteils einer belanglosen Sprache, der einen Merkmalswert des Sprachsegments einer belanglosen Sprache anzeigt, wobei die Schlüsselwort-Merkmalsdaten und die Merkmalsdaten der belanglosen Sprache vorab in einer Datenbank (104, 105) gespeichert sind,

einen Schritt (106, 107) einer Berechnung einer Wahrscheinlichkeit, die die Wahrscheinlichkeit anzeigt, dass mindestens ein Teil der Merkmalswerte der extrahierten, spontanen Sprache an die Schlüsselwort-Merkmalsdaten und die Merkmalsdaten der belanglosen Sprache angepasst ist;

einen Schritt (109, 110) eines Bestimmens mindestens eines der Schlüsselworte, das erkannt werden soll, und der belanglosen Sprache, basierend auf der berechneten Wahrscheinlichkeit,

wobei der Berechnungsschritt (106, 107) die Wahrscheinlichkeit unter Verwendung eines vorbestimmten Korrekturwerts berechnet, wenn der Berechnungsschritt (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist; und **gekennzeichnet durch**

einen Schritt eines Einstellens des Korrekturwerts basierend auf einem Rauschpegel, im Bereich dessen die spontane Sprache ausgesprochen ist, und

wobei der Berechnungsschritt (106, 107) die Wahrscheinlichkeit unter Verwendung des eingestellten Korrekturwerts berechnet, wenn der Berechnungsschritt (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist.

10. Aufzeichnungsmedium, wo ein Spracherkennungsprogramm so aufgezeichnet ist, um durch einen Computer gelesen und ausgeführt zu werden, wobei der Computer so angepasst ist, um eine Spracherkennungsvorrichtung zum Erkennen mindestens eines der Schlüsselworte, enthalten in einer ausgesprochenen, spontanen Sprache, zu steuern, wobei das Programm bewirkt, dass der Computer den Schritt eines Extrahierens eines spontanen Sprachmerkmalswerts ausführt, was ein Merkmalswert eines Sprachsegments der spontanen Sprache ist, durch Analysieren der spontanen Sprache;

einen Schritt eines Erlangens mindestens eines von Schlüsselwort-Merkmalsdaten, die einen Merkmalswert eines Sprachsegments des Schüsselworts anzeigen, und mindestens eines Merkmalsdatenteils einer belanglosen Sprache, der einen Merkmalswert des Sprachsegments einer belanglosen Sprache anzeigt, wobei die Schlüsselwort-Merkmalsdaten und die Merkmalsdaten der belanglosen Sprache vorab in einer Datenbank (104, 105) gespeichert sind,

einen Schritt (106, 107) einer Berechnung einer Wahrscheinlichkeit, die die Wahrscheinlichkeit anzeigt, dass mindestens ein Teil der Merkmalswerte der extrahierten, spontanen Sprache an die Schlüsselwort-Merkmalsdaten und die Merkmalsdaten der belanglosen Sprache angepasst ist;

einen Schritt (109, 110) eines Bestimmens mindestens eines der Schlüsselworte, das erkannt werden soll, und der belanglosen Sprache, basierend auf der berechneten Wahrscheinlichkeit,

wobei der Berechnungsschritt (106, 107) die Wahrscheinlichkeit unter Verwendung eines vorbestimmten Korrekturwerts berechnet, wenn der Berechnungsschritt (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist; und **gekennzeichnet durch**

einen Schritt eines Einstellens des Korrekturwerts basierend auf dem Verhältnis zwischen einer Dauer des bestimmten Schlüsselworts und der Dauer der spontanen Sprache, wenn die Bestimmungsvorrichtung (109, 110) mindestens eines der Schlüsselworte, das erkannt werden soll, und der belanglosen Sprache, basierend auf der berechneten Wahrscheinlichkeit, bestimmt,

wobei der Berechnungsschritt (106, 107) die Wahrscheinlichkeit unter Verwendung des eingestellten Korrekturwerts berechnet, wenn der Berechnungsschritt (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist.

11. Aufzeichnungsmedium nach einem der Ansprüche 9 oder 10, wobei das Programm weiterhin bewirkt, dass der Computer Merkmalsdaten der belanglosen Sprache, vorab gespeichert in der Datenbank (104, 105), erhält, die Daten von Merkmalswerten eines Sprachsegments einer Vielzahl der belanglosen Sprache haben.

12. Aufzeichnungsmedium nach einem der Ansprüche 9 bis 11 in einem Fall, in dem Komponenten-Merkmalsdaten einer belanglosen Sprache, die einen Merkmalswert eines Sprachsegments einer belanglosen Sprachkomponenten anzeigen, was eine Komponente der belanglosen Sprache ist, vorab in der Datenbank (104, 105) gespeichert sind, wobei das Programm weiterhin bewirkt, dass der Computer

einen Schritt eines Berechnens einer Wahrscheinlichkeit basierend auf den Komponenten-Merkmalsdaten der belanglosen Sprache, wenn die Berechnung eines Schritts (106, 107) die Wahrscheinlichkeit berechnet, die eine Wahrscheinlichkeit anzeigt, dass mindestens ein Teil der Merkmalswerte der extrahierten, spontanen Sprache an die Merkmalsdaten der belanglosen Sprache angepasst ist, und

einen Schritt (109, 110) eines Bestimmens mindestens eines der Schlüsselworte, das erkannt werden soll, und der belanglosen Sprache, basierend auf der berechneten Wahrscheinlichkeit;

ausführt.

**Revendications**

1. Appareil de reconnaissance vocale pour reconnaître au moins un des mots clés contenus dans un discours spontané prononcé, ledit appareil comprenant :

   un dispositif d'extraction pour extraire une valeur de caractéristique de discours spontané, laquelle est une valeur de caractéristique de segment de discours du discours spontané, en analysant le discours spontané ;
   une base de données (104, 105) dans laquelle au moins une des données de caractéristiques de mot clé (10) indiquant une valeur de caractéristique de segment de discours dudit mot clé et au moins une des données de caractéristiques de discours superflu indiquant une valeur de caractéristique de segment de discours de discours superflu sont pré-stockées ;
   un dispositif de calcul (106, 107) pour calculer une vraisemblance qui indique une probabilité qu'au moins une partie des valeurs de caractéristiques du discours spontané extrait soit associée auxdites données de caractéristiques de mot clé et auxdites données de caractéristiques de discours superflu ;
   un dispositif de détermination (109, 110) pour déterminer au moins un élément parmi lesdits mots clés qui doivent être reconnus et ledit discours superflu sur la base de la vraisemblance calculée ;

   dans lequel le dispositif de calcul (106, 107) calcule la vraisemblance en utilisant une valeur de correction prédéterminée lorsque ledit dispositif de calcul (106, 107) calcule la vraisemblance qui indique une probabilité qu'au moins une partie des valeurs de caractéristiques du discours spontané extrait soit associée auxdites données de caractéristiques de discours superflu ; et **caractérisé par**
   un dispositif de réglage pour régler la valeur de correction sur la base du niveau de bruit environnant où le discours spontané est prononcé,
   dans lequel !e dispositif de calcul (106, 107) calcule la vraisemblance en utilisant la valeur de correction réglée lorsque ledit dispositif de calcul (106, 107) calcule la vraisemblance qui indique une probabilité qu'au moins une partie des valeurs de caractéristiques du discours spontané extrait soit associée auxdites données de caractéristiques de discours superflu.

2. Appareil de reconnaissance vocale pour reconnaître au moins un des mots clés contenus dans un discours spontané prononcé, ledit appareil comprenant :

   un dispositif d'extraction pour extraire une valeur de caractéristique de discours spontané, laquelle est une valeur de caractéristique de segment de discours du discours spontané, en analysant le discours spontané ;
   une base de données (104, 105) dans laquelle au moins une des données de caractéristiques de mot clé indiquant une valeur de caractéristique de segment de discours dudit mot clé et au moins une des données de caractéristiques de discours superflu indiquant une valeur de caractéristique de segment de discours de discours superflu sont pré-stockées ;
   un dispositif de calcul (106, 107) pour calculer une vraisemblance qui indique une probabilité qu'au moins une partie des valeurs de caractéristiques du discours spontané extrait soit associée auxdites données de caractéristiques de mot clé et auxdites données de caractéristiques de discours superflu ;
   un dispositif de détermination (109, 110) pour déterminer au moins un élément parmi lesdits mots clés qui doivent être reconnus et ledit discours superflu sur la base de la vraisemblance calculée ;

   dans lequel le dispositif de calcul (106, 107) calcule la vraisemblance en utilisant une valeur de correction prédéterminée lorsque ledit dispositif de calcul (106, 107) calcule la vraisemblance qui indique une probabilité qu'au moins une partie des valeurs de caractéristiques du discours spontané extrait soit associée auxdites données de caractéristiques de discours superflu ; et **caractérisé par**
   un dispositif de réglage pour régler la valeur de correction sur la base du ratio entre une durée du mot clé déterminé et une durée du discours spontané lorsque le dispositif de détermination (109, 110) détermine au moins un élément parmi lesdits mots clés qui doivent être reconnus et ledit discours superflu sur la base de la vraisemblance calculée ;
   dans lequel ledit dispositif de calcul (106, 107) calcule la vraisemblance en utilisant la valeur de correction réglée lorsque ledit dispositif de calcul (106, 107) calcule la vraisemblance qui indique une probabilité qu'au moins une partie des valeurs de caractéristiques du discours spontané extrait soit associée auxdites données de caractéristiques de discours superflu.

3. Appareil de reconnaissance vocale selon l'une quelconque des revendications 1 ou 2, dans lequel lesdites données de caractéristiques de discours superflu pré-stockées dans ladite base de données (104, 105) ont des données de valeurs de caractéristiques de segment de discours d'une pluralité du discours superflu.

**4.** Appareil de reconnaissance vocale selon l'une quelconque des revendications 1 à 3, dans le cas où des données de caractéristiques de composant de discours superflu indiquant une valeur de caractéristique de segment de discours de composant de discours superflu qui est un composant du discours superflu sont pré-stockées dans ladite base de données (104, 105), dans lequel :

ledit dispositif de calcul (106, 107) pour calculer une vraisemblance sur la base desdites données de caractéristiques de composant de discours superflu lorsque ledit dispositif de calcul (106, 107) calcule la vraisemblance qui indique une probabilité qu'au moins une partie des valeurs de caractéristiques du discours spontané extrait soit associée auxdites données de caractéristiques de discours superflu, et
ledit dispositif de détermination (109, 110) pour déterminer au moins un élément parmi lesdits mots clés qui doivent être reconnus et ledit discours superflu sur la base de la vraisemblance calculée.

**5.** Procédé de reconnaissance vocale pour reconnaître au moins un des mots clés contenus dans un discours spontané prononcé, ledit procédé comprenant :

un processus d'extraction pour extraire une valeur de caractéristique de discours spontané, laquelle est une valeur de caractéristique de segment de discours du discours spontané, en analysant le discours spontané;
un processus d'acquisition pour acquérir au moins une des données de caractéristiques de mot clé indiquant une valeur de caractéristique de segment de discours dudit mot clé et au moins une des données de caractéristiques de discours superflu indiquant une valeur de caractéristique de segment de discours de discours superflu, lesdites données de caractéristiques de mot clé et données de caractéristiques de discours superflu étant pré-stockées dans une base de données (104, 105) ;
un processus de calcul pour calculer une vraisemblance qui indique une probabilité qu'au moins une partie des valeurs de caractéristiques du discours spontané extrait soit associée auxdites données de caractéristiques de mot clé et auxdites données de caractéristiques de discours superflu ;
un processus de détermination pour déterminer au moins un élément parmi lesdits mots clés qui doivent être reconnus et ledit discours superflu sur la base de la vraisemblance calculée, dans lequel ledit processus de calcul calcule la vraisemblance en utilisant une valeur de correction prédéterminée lorsque ledit processus de calcul calcule la vraisemblance qui indique une probabilité qu'au moins une partie des valeurs de caractéristiques du discours spontané extrait soit associée auxdites données de caractéristiques de discours superflu ; et **caractérisé par**
un processus de réglage pour régler la valeur de correction sur la base du niveau de bruit environnant où le discours spontané est prononcé,

dans lequel ledit processus de calcul calcule la vraisemblance en utilisant la valeur de correction réglée lorsque ledit processus de calcul calcule la vraisemblance qui indique une probabilité qu'au moins une partie des valeurs de caractéristiques du discours spontané extrait soit associée auxdites données de caractéristiques de discours superflu.

**6.** Procédé de reconnaissance vocale pour reconnaître au moins un des mots clés contenus dans un discours spontané prononcé, ledit procédé comprenant :

un processus d'extraction pour extraire une valeur de caractéristique de discours spontané, laquelle est une valeur de caractéristique de segment de discours du discours spontané, en analysant le discours spontané ;
un processus d'acquisition pour acquérir au moins une des données de caractéristiques de mot clé indiquant une valeur de caractéristique de segment de discours dudit mot clé et au moins une des données de caractéristiques de discours superflu indiquant une valeur de caractéristique de segment de discours de discours superflu, lesdites données de caractéristiques de mot clé et données de caractéristiques de discours superflu étant pré-stockées dans une base de données (104, 105) ;
un processus de calcul pour calculer une vraisemblance qui indique une probabilité qu'au moins une partie des valeurs de caractéristiques du discours spontané extrait soit associée auxdites données de caractéristiques de mot clé et auxdites données de caractéristiques de discours superflu;
un processus de détermination pour déterminer au moins un élément parmi lesdits mots clés qui doivent être reconnus et ledit discours superflu sur la base de la vraisemblance calculée, dans lequel ledit processus de calcul calcule la vraisemblance en utilisant une valeur de correction prédéterminée lorsque ledit processus de calcul calcule la vraisemblance qui indique une probabilité qu'au moins une partie des valeurs de caractéristiques du discours spontané extrait soit associée auxdites données de caractéristiques de discours superflu ; et **caractérisé par**

un processus de réglage pour régler la valeur de correction sur la base du ratio entre une durée du mot clé déterminé et une durée du discours spontané lorsque le processus de détermination détermine au moins un élément parmi lesdits mots clés qui doivent être reconnus et ledit discours superflu sur la base de la vraisemblance calculée ;

dans lequel ledit processus de calcul calcule la vraisemblance en utilisant la valeur de correction réglée lorsque ledit processus de calcul calcule la vraisemblance qui indique une probabilité qu'au moins une partie des valeurs de caractéristiques du discours spontané extrait soit associée auxdites données de caractéristiques de discours superflu.

7. Procédé de reconnaissance vocale selon l'une quelconque des revendications 5 ou 6, dans lequel lesdites données de caractéristiques de discours superflu pré-stockées dans ladite base de données (104, 105) ont des données de valeurs de caractéristiques de segment de discours d'une pluralité du discours superflu.

8. Procédé de reconnaissance vocale selon l'une quelconque des revendications 5 à 7, dans le cas où des données de caractéristiques de composant de discours superflu indiquant une valeur de caractéristique de segment de discours de composant de discours superflu qui est un composant du discours superflu sont pré-stockées dans ladite base de données (104, 105), dans lequel :

ledit processus de calcul pour calculer une vraisemblance sur la base desdites données de caractéristiques de composant de discours superflu lorsque ledit processus de calcul calcule la vraisemblance qui indique une probabilité qu'au moins une partie des valeurs de caractéristiques du discours spontané extrait soit associée auxdites données de caractéristiques de discours superflu, et
ledit processus de détermination pour déterminer au moins un élément parmi lesdits mots clés qui doivent être reconnus et ledit discours superflu sur la base de la vraisemblance calculée.

9. Support d'enregistrement dans lequel un programme de reconnaissance vocale est enregistré afin d'être lu et exécuté par un ordinateur, l'ordinateur étant adapté pour commander un appareil de reconnaissance vocale pour reconnaître au moins un des mots clés contenus dans un discours spontané prononcé, ledit programme amenant l'ordinateur à exécuter :

une étape d'extraction d'une valeur de caractéristique de discours spontané, laquelle est une valeur de caractéristique de segment de discours du discours spontané, en analysant le discours spontané ;
une étape d'acquisition d'au moins une des données de caractéristiques de mot clé indiquant une valeur de caractéristique de segment de discours dudit mot clé et d'au moins une des données de caractéristiques de discours superflu indiquant une valeur de caractéristique de segment de discours de discours superflu, lesdites données de caractéristiques de mot clé et données de caractéristiques de discours superflu étant pré-stockées dans une base de données (104, 105) ;
une étape (106, 107) de calcul d'une vraisemblance qui indique la probabilité qu'au moins une partie des valeurs de caractéristiques du discours spontané extrait soit associée auxdites données de caractéristiques de mot clé et auxdites données de caractéristiques de discours superflu ;
une étape (109, 110) de détermination d'au moins un élément parmi lesdits mots clés qui doivent être reconnus et ledit discours superflu sur la base de la vraisemblance calculée ;

dans lequel ladite étape de calcul (106, 107) calcule la vraisemblance en utilisant une valeur de correction prédéterminée lorsque ladite étape de calcul (106, 107) calcule la vraisemblance qui indique une probabilité qu'au moins une partie des valeurs de caractéristiques du discours spontané extrait soit associée auxdites données de caractéristiques de discours superflu ; et **caractérisé par**
une étape de réglage de la valeur de correction sur la base du niveau de bruit environnant où le discours spontané est prononcé, et
dans lequel ladite étape de calcul (106, 107) calcule la vraisemblance en utilisant la valeur de correction réglée lorsque ladite étape de calcul (106, 107) calcule la vraisemblance qui indique une probabilité qu'au moins une partie des valeurs de caractéristiques du discours spontané extrait soit associée auxdites données de caractéristiques de discours superflu.

10. Support d'enregistrement dans lequel un programme de reconnaissance vocale est enregistré afin d'être lu et exécuté par un ordinateur, l'ordinateur étant adapté pour commander un appareil de reconnaissance vocale pour reconnaître au moins un des mots clés contenus dans un discours spontané prononcé, ledit programme amenant l'ordinateur à exécuter les étapes suivantes :

une étape d'extraction d'une valeur de caractéristique de discours spontané, laquelle est une valeur de caractéristique de segment de discours du discours spontané, en analysant le discours spontané ;

une étape d'acquisition d'au moins une des données de caractéristiques de mot clé indiquant une valeur de caractéristique de segment de discours dudit mot clé et d'au moins une des données de caractéristiques de discours superflu indiquant une valeur de caractéristique de segment de discours de discours superflu, lesdites données de caractéristiques de mot clé et données de caractéristiques de discours superflu étant pré-stockées dans une base de données (104, 105) ;

une étape (106, 107) de calcul d'une vraisemblance qui indique la probabilité qu'au moins une partie des valeurs de caractéristiques du discours spontané extrait soit associée auxdites données de caractéristiques de mot clé et auxdites données de caractéristiques de discours superflu ;

une étape (109, 110) de détermination d'au moins un élément parmi lesdits mots clés qui doivent être reconnus et ledit discours superflu sur la base de la vraisemblance calculée ;

dans lequel ladite étape de calcul (106, 107) calcule la vraisemblance en utilisant une valeur de correction prédéterminée lorsque ladite étape de calcul (106, 107) calcule la vraisemblance qui indique une probabilité qu'au moins une partie des valeurs de caractéristiques du discours spontané extrait soit associée auxdites données de caractéristiques de discours superflu ; et **caractérisé par**

une étape de réglage de la valeur de correction sur la base du ratio entre une durée du mot clé déterminé et une durée du discours spontané lorsque le dispositif de détermination (109, 110) détermine au moins un élément parmi lesdits mots clés qui doivent être reconnus et ledit discours superflu sur la base de la vraisemblance calculée ;

dans lequel ladite étape de calcul (106, 107) calcule la vraisemblance en utilisant la valeur de correction réglée lorsque ladite étape de calcul (106, 107) calcule la vraisemblance qui indique une probabilité qu'au moins une partie des valeurs de caractéristiques du discours spontané extrait soit associée auxdites données de caractéristiques de discours superflu.

11. Support d'enregistrement selon l'une quelconque des revendications 9 ou 10, dans lequel le programme amène en outre l'ordinateur à acquérir des données de caractéristiques de discours superflu pré-stockées dans ladite base de données (104, 105) lesquelles ont des données de valeurs de caractéristiques de segment de discours d'une pluralité du discours superflu.

12. Support d'enregistrement selon l'une quelconque des revendications 9 à 11, dans le cas où des données de caractéristiques de composant de discours superflu indiquant une valeur de caractéristique de segment de discours de composant de discours superflu qui est un composant du discours superflu sont pré-stockées dans ladite base de données (104, 105), dans lequel le programme amène en outre l'ordinateur à exécuter les étapes suivantes :

une étape (106, 107) de calcul d'une vraisemblance sur la base desdites données de caractéristiques de composant de discours superflu lorsque ladite étape de calcul (106, 107) calcule la vraisemblance qui indique une probabilité qu'au moins une partie des valeurs de caractéristiques du discours spontané extrait soit associée auxdites données de caractéristiques de discours superflu, et

une étape (109, 110) de détermination d'au moins un élément parmi lesdits mots clés qui doivent être reconnus et ledit discours superflu sur la base de la vraisemblance calculée.

# FIG. 1

11-#1

KEYWORD MODEL 1

KEYWORD MODEL 2

11-#2

KEYWORD MODEL N

11-#n

12a

EXTRANEOUS-SPEECH
COMPONENT MODEL
(GARBAGE MODEL)

12b

EXTRANEOUS-SPEECH
COMPONENT MODEL
(GARBAGE MODEL)

10

27

# FIG. 2

$a_{ii}$

$a_{i+1\,i+1}$

$a_{i+2\,i+2}$

$i$    $a_{i\,i+1}$    $i+1$    $a_{i+1\,i+2}$    $i+2$

$b_i(x)$      $b_{i+1}(x)$      $b_{i+2}(x)$

$b_i(x)$

$x$

$b_{i+1}(x)$

$x$

$b_{i+2}(x)$

$x$

# FIG. 3A

------- EXTRANEOUS-SPEECH HMM

————— EXTRANEOUS-SPEECH COMPONENT HMM

CUMULATIVE
LIKELIHOOD

TIME

INTERVAL IN WHICH
EXTRANEOUS SPEECH
IS UTTERED

INTERVAL IN
WHICH KEYWORD
IS UTTERED

INTERVAL IN WHICH
EXTRANEOUS SPEECH
IS UTTERED

# FIG. 3B

CUMULATIVE
LIKELIHOOD

TIME

INTERVAL IN WHICH
EXTRANEOUS SPEECH
IS UTTERED

INTERVAL IN
WHICH KEYWORD
IS UTTERED

INTERVAL IN WHICH
EXTRANEOUS SPEECH
IS UTTERED

# FIG. 4

STATE

STATE TRANSITION
GRAPH WITH CORRECTION
VALUE SUBTRACTED

STATE TRANSITION
GRAPH WITH
NO CORRECTION
VALUE ADDED

STATE TRANSITION
GRAPH WITH
CORRECTION
VALUE ADDED

TIME

START OF
UTTERANCE

END OF
UTTERANCE

INTERVAL IN
WHICH EXTRANEOUS
SPEECH IS UTTERED

INTERVAL IN
WHICH KEYWORD IS
UTTERED

INTERVAL IN
WHICH EXTRANEOUS
SPEECH IS UTTERED

EP 1 355 296 B1

EP 1 355 296 B1

FIG. 5

31

# FIG. 6

S11 — ( INPUT SPONTANEOUS-SPEECH )

S12 — | EXTRACT SPONTANEOUS SPEECH SEGMENTS |

S13 — | DIVIDE SPONTANEOUS SPEECH INTO FRAMES |

S14 — | EXTRACT FEATURE VECTOR |

S15 — | CALCULATE LIKELIHOOD OF MATCH WITH EACH KEYWORD HMM |

S16 — | CALCULATE LIKELIHOOD OF MATCH WITH EXTRANEOUS-SPEECH COMPONENT HMM |

S17 — | CORRECT THE LIKELIHOOD OF MATCH WITH EXTRANEOUS-SPEECH COMPONENT HMM |

S18 — | MATCHING PROCESS |

S19 — < LAST FRAME? > NO

YES

S20 — | OUTPUT HIGHEST CUMULATIVE LIKELIHOOD FOR EACH KEYWORD TO DETERMINING DEVICE |

S21 — | EXTERNAL OUTPUT KEYWORD WITH HIGHEST CUMULATIVE LIKELIHOOD AS RECOGNIZED RESULT |

( END )

# FIG. 7

EP 1 355 296 B1

# FIG. 8

S31 — ( SPONTANEOUS-SPEECH INPUT )

S32 — EXTRACT SPONTANEOUS SPEECH SEGMENTS

S33 — DIVIDE SPONTANEOUS SPEECH INTO FRAMES

S34 — EXTRACT FEATURE VECTOR

S35 — CALCULATE LIKELIHOOD OF MATCH WITH EACH KEYWORD HMM

S36 — CALCULATE LIKELIHOOD OF MATCH WITH EXTRANEOUS-SPEECH COMPONENT HMM

S37 — CORRECT THE LIKELIHOOD OF MATCH WITH EXTRANEOUS-SPEECH COMPONENT HMM

S38 — MATCHING PROCESS

S39 — LAST FRAME? — NO

YES

S40 — OUTPUT HIGHEST CUMULATIVE LIKELIHOOD FOR EACH KEYWORD TO DETERMINING DEVICE

S41 — EXTERNAL OUTPUT KEYWORD WITH HIGHEST CUMULATIVE LIKELIHOOD AS RECOGNIZED RESULT

S42 — CALCULATE RATIO OF KEYWORD LENGTH TO LENGTH OF ENTIRE SPONTANEOUS SPEECH

S43 — CALCULATE CORRECTION VALUE BASED ON RATIO OF KEYWORD LENGTH TO LENGTH OF ENTIRE SPONTANEOUS SPEECH

( END )